# EUROPEAN PATENT SPECIFICATION

(11) **EP 2 986 159 B1**
(45) Date of publication and mention of the grant of the patent: **15.05.2019**
(21) Application number: 14763975.1
(22) Date of filing: 15.03.2014
(51) Int. Cl.: A23G 1/02, A23L 33/10, A23L 25/00, A23G 1/00

(54) **MYCELIATED PRODUCTS AND METHODS FOR MAKING MYCELIATED PRODUCTS FROM CACAO AND OTHER AGRICULTURAL SUBSTRATES**
MYZELIIERTE PRODUKTE UND VERFAHREN ZUR HERSTELLUNG MYZELIIERTER PRODUKTE AUS KAKAO UND ANDEREN LANDWIRTSCHAFTLICHE SUBSTRATEN
PRODUITS COLONISÉS PAR LE MYCÉLIUM ET PROCÉDÉS DE FABRICATION DE PRODUITS COLONISÉS PAR LE MYCÉLIUM À PARTIR DE CACAO ET D'AUTRES SUBSTRATS AGRICOLES

(30) Priority: 15.03.2013 US 201361802256 P; 15.03.2013 US 201313844685; 09.04.2013 US 201313859719; 01.05.2013 US 201313874832; 10.07.2013 US 201361844498 P; 23.07.2013 US 201361857671 P; 15.08.2013 US 201361866371 P; 19.08.2013 US 201361867501 P; 06.09.2013 US 201314020512; 06.09.2013 US 201314020781; 15.09.2013 US 201361878037 P; 27.10.2013 US 201361896097 P
(43) Date of publication of application: 24.02.2016
(73) Proprietor: Mycotechnology, Inc., Aurora, CO 80011 (US)
(72) Inventor: KELLY, Brooks, John, Denver, Colorado 80239 (US); LANGAN, James, Patrick, Denver, Colorado 80220 (US)
(74) Representative: Mewburn Ellis LLP
(86) International application number: PCT/US2014/029998
(87) International publication number: WO 2014/145265

(56) References cited:
- WO-A1-2007/031186
- WO-A2-2011/012680
- DE-A1- 4 341 316
- GB-A- 2 059 243
- JP-A- H11 346 657
- US-A1- 2004 009 143
- US-A1- 2005 255 126
- US-A1- 2006 014 267
- US-A1- 2009 130 138
- US-A1- 2011 229 616
- US-A1- 2012 171 308
- US-B1- 6 277 396
- SCHWAN ROSANE FREITAS: "Cocoa fermentations conducted with a defined microbial cocktail inoculum", APPLIED AND ENVIRONMENTAL MICROBIOLOGY, AMERICAN SOCIETY FOR MICROBIOLOGY, US, vol. 64, no. 4, 1 April 1998 (1998-04-01), pages 1477-1483, XP002410293, ISSN: 0099-2240
- OGUNDERO V W ED - DE HOOG G SYBREN ET AL: "THERMOPHILIC FUNGI AND FERMENTING COCOA-BEANS THEOBROMA-CACAO IN NIGERIA", MYCOPATHOLOGIA, KLUWER ACADEMIC PUBLISHERS, XX, vol. 82, no. 3, 1 January 1983 (1983-01-01), pages 159-165, XP009146539, ISSN: 0301-486X, DOI: 10.1007/BF00439221
- CRAFACK MICHAEL ET AL: "Influencing cocoa flavour usingPichia kluyveriandKluyveromyces marxianusin a defined mixed starter culture for cocoa fermentation", INTERNATIONAL JOURNAL OF FOOD MICROBIOLOGY, vol. 167, no. 1, 1 January 2013 (2013-01-01), pages 103-116, XP028734864, ISSN: 0168-1605, DOI: 10.1016/J.IJFOODMICRO.2013.06.024
- LEFEBER TIMOTHY ET AL: "On-farm implementation of a starter culture for improved cocoa bean fermentation and its influence on the flavour of chocolates produced thereof", FOOD MICROBIOLOGY, vol. 30, no. 2, 29 December 2011 (2011-12-29), pages 379-392, XP028905576, ISSN: 0740-0020, DOI: 10.1016/J.FM.2011.12.021
- SCHWAN ROSANE F ET AL: "THE MICROBIOLOGY OF COCOA FERMENTATION AND ITS ROLE IN CHOCOLATE QUALITY", CRITICAL REVIEWS IN FOOD SCIENCE AND NUTRITION, TAYLOR & FRANCIS, USA, vol. 44, no. 4, 1 January 2004 (2004-01-01), pages 205-221, XP008071905, ISSN: 1040-8398, DOI: 10.1080/10408690490464104

## Description

### TECHNICAL FIELD

The methods and products relate to use of fungal strains to improve flavor in agricultural substrates, in particular, cacao and other agricultural substrates.

### BACKGROUND

Most of the world's cacao is grown in a band spanning 20 degrees of latitude north and south of the equator, as the cacao tree needs a humid, hot tropical environment in which to grow and fruit healthy cacao pods that contain the cacao bean. Harvested when ripe, the average cacao pod produces 20 to 50 cacao beans emulsed in mucilaginous pulp. Generally, the cacao pod is prepared for the market by fermenting the pod for four to seven days (to remove the pulp) and the beans are dried for another five to fourteen days. There are about 20 different varieties of cacao and hundreds of hybrids. Of these, four major types of cacao are common in the commercial chocolate market. Forastero cacao accounts for approximately 95% of the world's cacao market. Criollo cacao accounts for about 7% of the global market, and is characterized as a finer, gourmet cacao that is more difficult to grow than Forastero. Trinitario cacao is a Forastero/Criollo hybrid that grows well in Trinidad. Nacional cacao is prized for having low bitterness and a sweet floral aroma, but is difficult to grow commercially. A majority of the world's cacao is produced in the Ivory Coast. This volume represents over 1 million tons per year. Ghana, Indonesia, Cameroon, Brazil, and Nigeria produce major amounts of cacao as well. Cacao is consumed world-wide, usually in the form of chocolate, which is a mixture of cacao with sweeteners and other components.

It is common for cacao beans to be treated with superheated steam to mitigate the bacterial content. It is believed that treating cacao beans with saturated steam also removes some of the desirable flavor components. Sugars and other sweeteners are mixed with cacao powder to form good-tasting chocolate. Often other flavors are added. Currently many health advocates, while acknowledging the health benefits of cacao, warn against the risks of excessive use of sweeteners including sugar and artificial sweeteners.

What is desired is a way of manufacturing cacao that achieves a great tasting product without the need for excessive sweetening. What is also desired is a way of processing cacao that retains desirable flavor components while minimizing the less desirable flavor components. Further, it is desirable to rely on natural processes to achieve a great tasting product.

A need remains in the art for improved myceliated products having reduced levels of undesirable taste components and/or increased levels of flavor and/or health promoting components relative to cacao beans or other agricultural substrate, and for methods of obtaining such products.

WO2011/012680 A2 describes microbial compositions for the fermentation of cocoa material. It describes the use of a microbial composition for regulating the fermentation of materials, in particular using compositions comprising specific combinations of microorganisms including at least three *Lactobacillus* species and a yeast species.

Schwan et al (Applied and Environmental Microbiology 1998, p.1477-1483) describes cocoa fermentations conducted with a defined microbial cocktail inoculum. The cocktail used consisted of a yeast, *Saccharomyces cerevisiae* var. *chevalieri,* two lactic acid bacterial species, *Lactobacillus lactis* and *Lactobacillus plantarum,* and two acetic acid bacterial species, *Acetobacter aceti* and *Gluconobacter oxydans* subsp. *suboxydans.*

GB2059243 describes a process for the fermentation of cocoa beans, comprising the steps of fermenting cocoa beans in dispersion in an aqueous medium, with agitation and aeration, with a strain of yeast of relatively high pectinolytic activity, at a temperature of 30 to 40°C, at a pH of 3.4 to 4.1 and for a duration of 20 to 30 hours, followed by fermenting the beans in an aqueous medium, with agitation and aeration, with a strain of acetic bacterium, at a temperature of 40 to 50°C, at a pH of 4 to 5 and for a duration of 36 to 48 hours, the resultant beans being recovered and dried. Ogundero (Mycopathologica 82, 159 165 (1983)) describes thermophilic fungi and fermenting cocoa beans in Nigeria. The fungi studied were *Mucor pusilus* Lindt., *Aspergillus fumigatus* Fres. And *Thermoascus aurantiacus* Miehe *sensu* Apinis.

Crafack et. al., (Int. J. Food Microbiol. 167 (2013) 103-116) described influencing cocoa flavour using *Pichia kluyveri* and *Kluyveromyces marxianus* in a defined mixed starter culture for cocoa fermentation.

### BRIEF DESCRIPTION OF THE DRAWINGS

FIG. 1 is a flow chart of a method of creating a bio-available mycelium product in accordance with the present invention.
FIG. 2 is a flow chart of a method of creating an extract of myceliated agricultural product for human consumption to effectuate neuro-regeneration and neuro-protection in humans in accordance with the present invention.
FIG. 3 is a flow chart of a method of removing caffeine from cacao beans or other agricultural substrate according to the instant invention.
FIG. 4 is a flow chart of a method of creating a myceliated coffee product.
FIG. 5 is a flow chart of a method of creating a myceliated coffee product.
FIG. 6 is a conveyer used in accordance with the present invention.
FIG. 7 is a conveyer used in accordance with the present invention to deliver containers to an autoclave.
FIG. 8(A), 8(B), 8(C) show autoclavable bags having a pebbled surface, a stack of autoclavable bags, and a rolled autoclavable material.
FIG. 9 is a flow chart of a method of creating a myceliated cacao product.
FIG. 10 is a flow chart of a method of creating a myceliated cacao product.

### SUMMARY OF THE INVENTION

The invention is as defined in the appended claims.

The present invention provides a method for the preparation of a myceliated cacao. Also described herein but not part of the invention as claimed are methods of the preparation of myceliated other agricultural substrate product. This method includes the step of providing prepared cacao beans or other agricultural substrate, which includes providing cacao beans or other agricultural substrate and sterilizing the cacao beans or other agricultural substrate to provide prepared cacao beans or other agricultural substrate. The method also includes the step of providing a prepared fungal component. The method also comprises inoculating the prepared cacao beans or other agricultural substrate with the prepared fungal component and culturing the inoculum to prepare the myceliated cacao or other agricultural substrate product.

The method may include reducing the amount of undesirable taste components. Reducing the amount of undesirable taste components optionally includes at least one, or two aqueous extractions of the cacao beans or other agricultural substrate. An undesirable taste component includes methylxanthines, such as theobromine and/or 2-methoxy-3-isopropylpyrazine.

The method may include a step of hydrating the cacao beans or other agricultural substrate, optionally to about 60%. The methods described also include where the prepared fungal component is *G. lucidum,* optionally, *G. lucidum* strain 806, *C. sinensis,* and/or *T. melanosporum.* The methods may include screening a number of strains of fungi and selecting a strain having an enhanced ability to grow on, metabolize or utilize cacao beans or other agricultural substrate, and/or selecting a strain that is capable of enhanced removal of one or more undesirable taste components from the cacao beans or other agricultural substrate, and/or enhanced removal of caffeine from the cacao beans or other agricultural substrate.

The prepared fungal component may be maintained on an undefined media comprising an aqueous cacao beans or other agricultural substrate extract and an energy source, or, alternately, the media comprises 2-methoxy-3-isopropylpyrazine and/or methylxanthines, such as theobromine. The maintenance of the strain of fungi causes an adaptation of the fungi resulting in enhancement of the fungi's ability to grow on, metabolize or utilize cacao beans or other agricultural substrate, and/or 2-methoxy-3-isopropylpyrazine and/or methylxanthines, such as theobromine.

The methods may also include where the culturing step may be a fermentation step carried out under semi-anaerobic conditions, optionally for about 7 days.

Described herein but not claimed and not part of the invention are methods that may result in myceliated coffee products having reduced levels of undesirable taste components, such as 2-methoxy-3-isopropylpyrazine and/or methylxanthines, such as theobromine, and increased levels of myceliation products, such as beta glucans, pyrazines, and polysaccharides, relative to the cacao beans or other agricultural substrate.

Provided herein is a myceliated cacao product prepared by the methods of the invention, and a myceliated cacao having reduced levels of undesirable taste components and increased levels of myceliation products relative to starting or untreated cacao beans or other agricultural substrate.

### DETAILED DESCRIPTION OF THE INVENTION

The present invention provides a method for the preparation of a myceliated cacao product. This method includes the step of providing prepared cacao, which includes providing the cacao and sterilizing the cacao or other agricultural substrate to provide prepared cacao or other agricultural substrate. The method also includes the step of providing a prepared fungal component. The method also comprises inoculating the prepared cacao with the prepared fungal component and culturing the prepared cacao or other agricultural substrate and prepared fungal component to allow myceliation to produce the myceliated cacao. These steps may be performed in any order.

Prepared cacao is also provided, which includes the step of providing cacao or other agricultural substrate.

One agricultural substrate includes cacao beans or other agricultural substrate. Coffee refers to genus *Coffea* which is a genus of flowering plants whose seeds, variously called coffee beans or green coffee beans, are used to make coffee. It is a member of the Rubiaceae family. Coffee beans may be selected from one of several coffee varieties which are diverse cultivars derived through selective breeding or natural selection of coffee plants. Coffee beans of the same variety grown in different locations may have distinctive characteristics such as flavor (flavor criteria include terms such as "acidy", "citrus-like" or "earthy"), caffeine content, body or mouthfeel, and acidity. Cacao beans or other agricultural substrate disclosed herein may be any species of coffee, including *Coffea arabica* and *Coffea robusta* (also known as *Coffea conephora*); additional species of coffee useful for the present invention include *Coffea benghalensis,* or Bengal coffee; *Coffea congensis,* or Congo coffee; *Coffea liberica,* or Liberian coffee; *Coffea stenophylla,* or Sierra Leonian coffee; *Coffea excelsia,* another Liberian coffee; *Coffea bonnieri; Coffea gallienii;* and *Coffea mogeneti.* Many Arabica varietals are named after the country or region in which they are predominantly found, or in which they originated. Some of the exemplary varietals of Arabica coffee include Typica, Bourbon, Caturra, Catuai, Mundo Nova, and Blue Mountain. Also described are and derivative species of coffee including any genetically-modified (GMO) strains or cultivars and also any heirloom variety (non-GMO) strains or cultivars of coffee.

One agricultural substrate is cacao beans. *Theobroma cacao,* hereinafter "cacao" or "cacao", belongs to the genus Theobroma classified under the subfamily Sterculioidea of the mallow family Malvaceae. There are about 20 different varieties of cacao varieties and hundreds of hybrids and all are suitable for use in the present invention, for example, suitable cacao beans are Forastero cacao, Criollo cacao, Trinitario cacao, and Nacional cacao. Cacao (or cacao) beans suitable for the present invention have been harvested when the cacao pod is ripe. The average cacao pod produces 20 to 50 cacao beans emulsed in mucilaginous pulp. Generally, the cacao pod is prepared for the market by fermenting the pod for four to seven days (to remove the pulp) and the beans are dried for another five to fourteen days. The dried beans are suitable for the present invention.

The raw cacao beans have an abundance of naturally occurring bacteria and other microbes. It is common for cacao beans to be treated with superheated steam to mitigate the bacterial content. It is believed that treating cacao beans with saturated steam also removes some of the desirable flavor components. Superheated steam-treated cacao beans are also suitable for the present invention.

Agricultural substrates that may be myceliated by methods described herein but not claimed and not part of the invention include: all cereals, grains, all species of wheat, rye, brown rice, white rice, red rice, gold rice, wild rice, rice, barley, triticale, rice, sorghum, oats, millets, quinoa, buckwheat, fonio, amaranth, teff and durum; apples and pears, apricots, cherries, almonds, peaches, strawberries, raisins, manioc, cacao, banana, Rubiaceae sp. (coffee), lemons, oranges and grapefruit; tomatoes, potatoes, peppers, eggplant, Allspice, mango powder, Angelica, Anise (*Pimpinella anisum*)*,* Aniseed myrtle (*Syzygium anisatum*)*,* Annatto (*Bixa orellana*)*,* Apple mint (*Mentha suaveolens*)*,* Artemisia vulgaris, Mugwort, Asafoetida (*Ferula assafoetida*)*,* Berberis, Banana, Basil (*Ocimum basilicum*)*,* Bay leaves, Bistort (*Persicaria bistorta*)*,* Black cardamom, Black cumin, Blackcurrant, Black limes, Bladder wrack (*Fucus vesiculosus*)*,* Blue Cohosh, Blue-leaved Mallee (*Eucalyptus polybractea*)*,* Bog Labrador Tea (*Rhododendron groenlandicum*)*,* Boldo (*Peumus boldus*), Bolivian Coriander (*Porophyllum ruderale*), Borage (*Borago officinalis*), Calamus, Calendula, Calumba (*Jateorhiza calumba*), Chamomile, Cannabis, Caper (*Capparis spinosa*)*,* Caraway, Cardamom, Carob Pod, Cassia, Casuarina, Catnip, Cat's Claw, Catsear, Cayenne pepper, *Celastrus paniculatus,* Comfrey, Celery salt, Celery seed, Centaury, Chervil (*Anthriscus cerefolium*)*,* Chickweed, Chicory, Chile pepper, Chili powder, Cinchona, Chives (*Allium schoenoprasum*), Cicely (*Myrrhis odorata*)*,* Cilantro (see Coriander) (*Coriandrum sativum*)*,* Cinnamon (*and Cassia*)*,* Cinnamon Myrtle (*Backhousia myrtifolia*)*,* Clary, Cleavers, Clover, Cloves, Coffee, Coltsfoot, Comfrey, Common Rue, Condurango, Coptis, Coriander, Costmary (*Tanacetum balsamita*)*,* Couchgrass, Cow Parsley (*Anthriscus sylvestris*)*,* Cowslip, Cramp Bark (*Viburnum opulus*)*,* Cress, Cuban Oregano (*Plectranthus amboinicus*), Cudweed, Cumin, Curry leaf (*Murraya koenigii*), Damiana (*Turnera aphrodisiaca*)*,* Dandelion (*Taraxacum officinale*)*,* Demulcent, Devil's claw (*Harpagophytum procumbens*), Dill seed, Dill (*Anethum graveolens*)*,* Dorrigo Pepper (*Tasmannia stipitata*)*,* Echinacea, Echinopanax Elatum, Edelweiss, Elderberry, Elderflower, Elecampane, Eleutherococcus senticosus, Epazote (*Chenopodium ambrosioides*)*,* Ephedra, *Eryngium foetidum,* Eucalyptus, Fennel (Foeniculum vulgare), Fenugreek, Feverfew, Figwort, Five-spice powder (Chinese), Fo-ti-tieng, Fumitory, Galangal, Garam masala, Garden cress, Garlic chives, Garlic, Ginger (*Zingiber officinale*)*,* Ginkgo biloba, Ginseng, Ginseng, Siberian (Eleutherococcus senticosus), Goat's Rue (*Galega officinalis*)*,* Goada masala, Golden Rod, Golden Seal, Gotu Kola, Grains of paradise (*Aframomum melegueta*)*,* Grains of Selim (*Xylopia aethiopica*)*,* Grape seed extract, Green tea, Ground Ivy, Guaco, Gypsywort, Hawthorn (*Crataegus sanguinea*)*,* Hawthorne Tree, Hemp, Herbes de Provence, Hibiscus, Holly, Holy Thistle, Hops, Horehound, Horseradish, Horsetail (*Equisetum telmateia*)*,* Hyssop (*Hyssopus officinalis*)*,* Jalap, Jasmine, Jasmin pearl, Jiaogulan (*Gynostemma pentaphyllum*)*,* Joe Pye weed (Gravelroot), John the Conqueror, Juniper, Kaffir Lime Leaves (*Citrus hystrix, C. papedia*)*,* Kaala masala, Knotweed, Kokam, Labrador tea, Lady's Bedstraw, Lady's Mantle, Land cress, Lavender (*Lavandula* spp.), Ledum, Lemon Balm (*Melissa officinalis*)*,* Lemon basil, Lemongrass (*Cymbopogon citratus, C. flexuosus,* and other species), Lemon Ironbark (Eucalyptus staigeriana), Lemon mint, Lemon Myrtle (*Backhousia citriodora*)*,* Lemon Thyme, Lemon verbena (*Lippia citriodora*)*,* Licorice - adaptogen, Lime Flower, Limnophila aromatica, Linseed, Liquorice, Long pepper, Lovage (*Levisticum officinale*), Luohanguo, Mace, Mahlab, Malabathrum, Manchurian Thorn Tree *(Aralia manchurica*)*,* Mandrake, Marjoram (*Origanum majorana*)*,* Marrubium vulgare, Marsh Labrador Tea, Marshmallow, Mastic, Meadowsweet, Mei Yen, Melegueta pepper (*Aframomum melegueta*)*,* Mint, Milk thistle (Silybum), Bergamot (*Monarda didyma*)*,* Motherwort, Mountain Skullcap, Mullein (*Verbascum thapsus*)*,* Mustard, Mustard seed, *Nashia inaguensis,* Neem, Nepeta, Nettle, Nigella sativa, Kolanji, Black caraway, Noni, Nutmeg, Mace, Marijuana, Oenothera (*Oenothera biennis*)*,* Olida (*Eucalyptus olida*)*,* Oregano (*Origanum vulgare, O. heracleoticum*)*,* Orris root, Osmorhiza, Olive Leaf (used in tea and as herbal supplement), *Panax quinquefolius,* Pandan leaf, Paprika, Parsley (*Petroselinum crispum*)*,* Passion Flower, Patchouli, Pennyroyal, Pepper (black, white, and green), Peppermint, Peppermint Gum (*Eucalyptus dives*)*,* Perilla, Plantain, Pomegranate, Ponch phoran, Poppy seed, Primrose (Primula), candied flowers, dry tea mixes, Psyllium, Purslane, Quassia, Quatre epices, Ramsons, Raspberry, Raspberry (leaves), Reishi, Restharrow, Rhodiola rosea, Riberry (*Syzygium luehmannii*)*,* Rocket/Arugula, Roman chamomile, Rooibos, Rosehips, Rosemary (*Rosmarinus officinalis*)*,* Rowan Berries, Rue, Safflower, Saffron, Sage (*Salvia officinalis*)*,* Saigon Cinnamon, St John's Wort, Salad Burnet (*Sanguisorba minor* or *Poterium sanguisorba*)*,* Salvia, Sichuan Pepper (Sansho), Sassafras, Savory (*Satureja hortensis, S. montana*)*,* Schisandra (*Schisandra chinensis*), *Scutellaria costaricana,* Senna (herb), Senna obtusifolia, Sesame seed, Sheep Sorrel, Shepherd's Purse, Sialagogue, Siberian ginseng (*Eleutherococcus senticosus*)*,* Siraitia grosvenorii (luohanguo), Skullcap, Sloe Berries, Smudge Stick, Sonchus, Sorrel (*Rumex* spp.), Southernwood, Spearmint, Speedwell, Squill, Star anise, Stevia, Strawberry Leaves, Suma (*Pfaffia paniculata*)*,* Sumac, Summer savory, *Sutherlandia frutescens,* Sweet grass, Sweet cicely (*Myrrhis odorata*)*,* Sweet woodruff, Szechuan pepper (*Xanthoxylum piperitum*)*,* Tacamahac, Tamarind, Tandoori masala, Tansy, Tarragon (*Artemisia dracunculus*)*,* Tea, Teucrium polium, Thai basil, Thistle, Thyme, Toor Dall, Tormentil, *Tribulus terrestris,* Tulsi (*Ocimum tenuiflorum*)*,* Turmeric (*Curcuma longa*), Uva Ursi also known as Bearberry, Vanilla (*Vanilla planifolia*)*,* Vasaka, Vervain, Vetiver, Vietnamese Coriander (*Persicaria odorata*), Wasabi (*Wasabia japonica*)*,* Watercress, Wattleseed, Wild ginger, Wild Lettuce, Wild thyme, Winter savory, Witch Hazel, Wolfberry, Wood Avens, Wood Betony, Woodruff, Wormwood, Yarrow, Yerba Buena, Yerbe mate, Yohimbe, Za'atar, Zedoary Root, or derivations thereof in aqueous or semi-aqueous solution(s).

### HYDRATION AND WASHING STEP

The cacao beans or other agricultural substrate may be prepared for use in the methods disclosed herein, resulting in a prepared cacao bean or other agricultural substrate.

The cacao bean or other agricultural substrate is optionally not dried prior to being used in the processes. After the cacao bean or other agricultural substrate is harvested, the cacao bean or other agricultural substrate optionally has the pulp removed by any processes known in the art (demucilaged), such as fermentation, and then the cacao bean or other agricultural substrate can be used in the present invention without further cacao bean or other agricultural substrate treatment, such as drying. The pulp may also be retained. Generally, after a fermentation (demucilage) step, the cacao beans have a moisture content of about 55% to 60%. In this method, the hydration and/or washing step as described below is not necessary or is obviated by the use of the undried cacao bean or other agricultural substrate. In some methods, the cacao bean or other agricultural substrate may be partially dried and subsequently hydrated as described herein.

The cacao beans or other agricultural substrate may be prepared by a step of hydrating the cacao beans or other agricultural substrate. Hydration is particularly useful where the cacao beans or other agricultural substrate have been dried. Hydration ensures that the substrates have optimal moisture content for the culturing (myceliation) process. Hydration may be accomplished by a number of methods known in the art.

The hydration may be accomplished by an aqueous medium. The aqueous medium includes water and optionally, additional excipients. Water may be, without limitation, deionized, tap, distilled or mineralized. Other excipients can be added to the water, such as buffers to maintain a certain pH, sodium chloride, citric acid and/or ascorbic acid. The pH may be neutral or adjusted. The temperature of the aqueous medium may be room temperature, or elevated in temperature to accelerate the hydration process.

Hydration may be accomplished by allowing the cacao beans or other agricultural substrate to soak in the aqueous medium for any appropriate length of time, ranging from a few seconds or less to overnight. Cacao beans, for example, are fairly hygroscopic and will require less time to hydrate. The soaking step for the hydration and/or aqueous extraction step may be less than a second, at least five seconds, at least ten seconds, at least thirty seconds, at least a minute, at least five minutes, at least ten minutes, at least twenty minutes, at least thirty minutes, at least forty minutes, at least fifty minutes, at least an hour, at least an hour and a half, at least two hours, at least two and a half hours, at least three hours, at least four hours, at least five hours, at least six hours, at least seven hours, at least eight hours, at least ten hours, at least twelve hours, or at least fifteen hours, at least eighteen hours, at least twenty four hours, at least thirty six hours, or at least forty-eight hours. However, the time for the hydration step should be selected in view of the fact that the cacao beans or other agricultural substrate are not sterile and soaking for too long of a time may encourage the growth of undesirable organisms. The hydration time should be selected to optimize the substrate moisture content and molecular constituents of the cacao bean or other agricultural substrates.

The cacao beans or other agricultural substrate may be hydrated at any temperature that allows for effective hydration; in one embodiment, the temperature of the aqueous component temperature is room temperature. Hydration temperature should be selected in view of the fact that at high temperatures, desirable flavor components may be altered.

Hydration may be performed under normal atmospheric pressure or may be performed under increased pressures to accelerate the hydration process and/or aqueous extraction process, such as between 1 atmospheres and 2 atmospheres, for example, at 1.5 atmospheres.

Moisture content of the hydrated cacao beans or other agricultural substrate is optionally between about 20% and about 80% moisture content, between a 40% and 70% moisture content. In one method, the moisture content is at least about 30%, at least about 50%, or at least about 60%. In one method, for cacao bean, the moisture content is at least about 36%.

The hydration step may occur in a container by any method known in the art. In one method, the container is a drum, such as a 55 gallon drum, or a 5-gallon bucket. In this method, a volumetric 1:1 (equal volumes) ratio of cacao beans or other agricultural substrate:aqueous component are allowed to stand for 5 minutes to 24 hours. For example, the 55 gallon drum or 5 gallon bucket is filled half-way to the top with cacao beans or other agricultural substrate and aqueous medium is added to submerge the cacao beans or other agricultural substrate. In this method, the cacao beans or other agricultural substrate may absorb the entire aqueous component. In another method, the cacao beans or other agricultural substrate, held in a container, may be filled with water to completely submerge the beans, in one method, without significant excess.

The step of providing prepared cacao beans or other agricultural substrate optionally includes a step of removing undesirable taste components by washing or rinsing the cacao beans or other agricultural substrate. The wash or rinse may be the aqueous medium as described above. In one method, the cacao beans or other agricultural substrate are optionally washed or rinsed prior to, during, or after the optional hydration step. Washing, draining and/or rinsing the cacao beans or other agricultural substrate can be performed by any method known in the art. The cacao beans or other agricultural substrate may be washed one time, at least two times, at least three times, at least four times, at least five times, at least ten times, at least fifteen times, at least twenty times, at least fifty times or more. In one method the wash step is performed two times. The wash or rinse step may include optional soaking times as described herein.

The cacao beans or other agricultural substrate may be washed by a method of filling a container holding the cacao beans or other agricultural substrate with water to submerge the cacao or other agricultural substrates, allowing the water to soak for 10 seconds to 4 hours, draining the water off and repeating the steps as many times as desired, or to raise the beans to the desired moisture level. The washing or rinsing step may also be carried out until the cacao beans or other agricultural substrate have had a determined amount of undesirable taste component removed.

The cacao beans or other agricultural substrate may be washed at any temperature that allows for the efficient extraction of undesirable taste components; the temperature of the aqueous medium temperature may be room temperature. Wash temperature should be selected in mind of the fact that at high temperatures, desirable flavor components may be altered, destroyed and/or extracted.

The excess aqueous medium or component may be removed and/or separated and/or drained from the hydrated cacao beans or other agricultural substrate after the hydration step. This step may also be referred to as an aqueous extraction step. This step may be done to remove undesirable taste components.

The major components of coffee include caffeine, minerals, tannic acid, cellulose, water, fat, protein and fibers. Coffee contains methylxanthines such as caffeine, theophylline, and theobromine, and other classes of compounds such as flavonoids, phenols, phenolic acids, volatile alkaloids, non-volatile alkaloids, and chlorogenic acids, among others. Roasted coffee contains some undesirable taste components as well. These components will contribute to a perception of a harsh and/or bitter taste to the coffee. Cacao beans are also bitter, resulting from compounds such as 2-methoxy-3-isopropylpyrazine and methylxanthines such as theobromine, for example. These undesirable taste components are commonly mitigated by addition of sugar or cream to mask the undesirable taste components which adds unwanted sugar and fats to the diet of the user. Reduced bitterness and/or harshness is noted in more premium, expensive coffee varieties such as Arabica coffee.

The hydration step, aqueous extraction step, wash and/or rinse step, individually or in combination, can optionally reduce and/or remove undesirable taste components from the cacao beans or other agricultural substrate and may be carried out as described herein until the desired amount of undesirable taste component has been removed from the cacao beans or other agricultural substrate.

In some methods, undesirable taste components are removed and include methods where 5% of undesirable taste components are removed; in other methods, up to 10%, up to 15%, up to 20%, up to 25%, up to 30%, up to 35%, up to 40%, up to 45%, up to 50%, up to 55%, up to 60%, up to 65%, up to 70%, up to 75%, up to 80%, up to 85%, up to 90%, or up to 95% of undesirable taste components are removed in the processes of the instant invention, including the rinse step. About 25% to about 80% of the undesirable taste components may be removed, or about 45-50% of the undesirable taste components may be removed.

Determination of the extent of the removal of at least one undesirable taste component may be determined by the appearance, taste and/or chemical composition (by methods known in the art) of the myceliated product. Alternatively, the cacao beans' or other agricultural substrate's appearance or chemical composition may be determined by known methods. This determination may be quantitative, e.g., the chemical composition of the myceliated product may be measured by assay methods, or determined qualitatively by taste testing by skilled persons.

Up to 5% of one or more of the undesirable taste components may be removed; in other methods, up to 10%, up to 15%, up to 20%, up to 25%, up to 30%, up to 35%, up to 40%, up to 45%, up to 50%, up to 55%, up to 60%, up to 65%, up to 70%, up to 75%, up to 80%, up to 85%, up to 90%, or up to 95% of one or more of the undesirable flavor components are removed. In one method, one or more of the undesirable flavor components are quantitatively removed.

In one method, reduction of the desirable flavor components such as volatile oils is minimized by the processes of the present invention. In processing cacao beans or other agricultural substrate, the art teaches to steam treat, steam extract, or stream strip the cacao beans or other agricultural substrate prior to roasting, which can remove many desirable volatile oils. The processes may avoid the steam roasting step for, thereby helping to preserve the desirable volatile oils that contribute to cacao flavor.

### HEAT TREATMENT

The methods optionally comprise a method of heat treatment such as pasteurizing and/or sterilizing the cacao beans or other agricultural substrate. In one method, the cacao beans or other agricultural substrate are sterilized to provide prepared cacao beans or other agricultural substrate. This step may be accomplished by any method known in the art. For example, this step may performed under atmospheric pressure or under increased pressure. This step may also be referred to as "pre-processing." This step is performed to reduce or remove undesirable microbial or fungal organism contaminants on the cacao beans or other agricultural substrate, particularly mold spores.

Methods for pasteurization and/or sterilization may be carried out as known in the art. As an example of pasteurization, cacao beans or other agricultural substrate may be subjected to dry heat treatment at atmospheric pressure at 145 °F to 190 °F for 30 to 90 minutes, alternatively at 140 °F to 210 °F for 20-100 minutes.

Sterilization of the cacao beans or other agricultural substrate may be performed as is known the art. For example, cacao beans or other agricultural substrate may be sterilized by heating under pressure at 15 lb/in² at 121-122 °C for 20 to 100 minutes, such as 90 minutes, and adding ¾ lb for every 1,000 ft above sea level. method, the steam is superheated to 251-255 °F. In one method, cacao beans are sterilized for 80 minutes at 22 psi with slightly dry saturated steam at 255 °F. Cacao beans or other agricultural substrate may be sterilized in a container. The container may optionally be the same container as the container used for the aqueous extraction and/or hydration step. The container may be optionally sealed and the cacao beans or other agricultural substrate may be sterilized by the application of heat to the exterior of the container. In one method, the heat is provided by applying steam to the exterior of the container for a sufficient period of time to allow for sterilization of the contents.

The sealed container of some methods can provide some advantages. For example, sealing the container minimizes outflow of flavor components and aromatic components from the cacao beans or other agricultural substrate, which can be noticed by the lack of cacao beans or other agricultural substrate aroma from steam from the pressure cooker or autoclave during the sterilization process. Sealing also prevents water-soluble flavor and aromatic components from escaping the cacao beans or other agricultural substrate beans directly into steam, hot air, or heated water.

Suitable containers include containers known in the art for mushroom cultivation. Optionally the containers have a section for exchanging air or gases but do not allow passage of any other component. Such sections are known in the art and include filter strips. In one method, the container is a drum, for example, a 55 gallon drum. In some methods, the containers of the instant invention can be glass, carbon and stainless steel drums, carboys, or polypropylene bags or drums. Fermentors and bioreactors can also be used as containers of the instant invention. In some methods, the containers have a means for gas exchange that precludes passage of contaminants, such as filter zones or valves. In one method the container is a bag, for example, an autoclavable, polypropylene bag with filter strips, and a gamma-irradiated polyethylene bag with filter zones.

A further advantage of the bags described above is that when sealed, they conform to shape of the cacao beans or other agricultural substrate beans when pressurized during the sterilization step. Conforming the bags to the shape of the cacao beans or other agricultural substrate inhibits movement of the cacao beans or other agricultural substrate relative to each other, preventing or minimizing degradation of the surface of the beans or substrates. This conforming of the bag to the shape of the cacao beans or other agricultural substrate also improves heat transfer, as the lack of air prevents air insulation of the cacao beans or other agricultural substrate from heat. The bags can be of any dimension. In one method, bags are elongated or flattened to hasten the heating process, for example, the length may be three times the diameter of the bag. This dimension may also facilitate the advantageous stacking of bags or positioning of bags for sterilization.

The size of the bags to be used can be chosen according to the volume or amount of cacao beans or other agricultural substrate to treat by the methods disclosed herein. Exemplary amounts of cacao beans or other agricultural substrate to use per bag include 1 lb to 150 lbs of cacao beans or other agricultural substrate, although larger and smaller amounts of cacao beans or other agricultural substrate are contemplated.

In another method, the bags are flattened, having a thickness of 1/10th or less than the sum of the peripheral edges of each bag. The bags can be round in shape, having a circumference that defines the peripheral edges of each bag. Alternatively, the bags can be rectangular so that the sum of the sides defines the peripheral edges of each bag. The bags can be conjoined so that a series of rectangular bags can be easily handled in a production environment. All bags have breathable patches (filter strips) that provide for the approximation of an anaerobic environment. In yet another method, the bags are flattened to hold a layer of beans being less than three beans thick. Accordingly, heat quickly penetrates the flattened bags to the beans to effectuate sterilization or pasteurization. In this method, due to the pressurization, the bag will conform to the shape of the cacao beans or other agricultural substrate, and this will yield a pebbled surface on the outer surface of each bag when pressure is applied. The pebbled bag surface forms interstitial spaces that allow heat to penetrate between bags that are stacked to accelerate the sterilization or pasteurization process. The pebbled surface of the bags also induces turbulent fluid flow along the bag surface to improve heat transfer to the cacao beans or other agricultural substrate.

In another method, the cacao beans or other agricultural substrate are vacuum packed in the bags to eliminate air that could draw volatile flavor or aromatic components from the bags.

In another method, the bags are replaced by sheets of autoclavable material, such as BPA-free plastic. One base sheet is continuously dispensed along the top of a conveyor, cacao beans or other agricultural substrates are then laid on the dispensed base sheet. A second top sheet is overlaid upon the cacao beans or other agricultural substrate and sealed to the base sheet. A vacuum is applied between the top and bottom sheet to evacuate air, then the sheets are sealed at predetermined distances to form sections. Each section holds a predetermined volume of cacao beans or other agricultural substrate. The sections are conveyed through an autoclave, or oven, to effectuate the pasteurization or sterilization process. Heat may be applied in a pressurized or non-pressurized environment in the form of steam, hot water under pressure, hot air in turbulent or laminar flow over the sheets, or other heated fluid. In a variation, the sections containing the cacao beans or other agricultural substrate are rolled and placed in an autoclave for pressurization or sterilization. One roll can contain many sections.

Since the cacao beans or other agricultural substrate cause a pebbled surface on the exterior of the sheets, interstitial space exists on the outside surface of the sheets to hasten the pasteurization or sterilization process by allowing heated fluid to readily penetrate between sheets. The pebbled sheet surface also induces turbulent fluid flow that further improves heat transfer to the cacao beans or other agricultural substrate. The pebbled surface inhibits relative movement between the beans to assure that the cacao beans or other agricultural substrate do not crack, break or rub.

### FUNGAL COMPONENT

The fungal component is as defined in the appended claims. Also described herein are fungi from phylum Basidiomycotina of Eumycota, including any Fungi belonging to Polyporaceae and Hericiaceae, wherein Fungi selected from Basidiomycotina of Eumycota include Eumycota, including at least one selected from Basidiomycotina and Ascomycotina, including the strains: *Hericium erinaceus, Pleurotus ostreatus, Pleurotus eryngii, Pleurotus citrinopileatus, Pleurotus djamor, Trametes versicolor, Lentinula edodes, Armillariella mellea, Tricholoma matsutake, Flammulina velutipes, Vovariella volvacea, Agaricus campestris, Agaricus blazei, Grifola frondosa, Pholiota nameko, Agrocybe cylindracea, Boletus ornatipes, Ganoderma lucidum, Ganoderma applanatum, Ganoderma tsugae, Hypsizygus marmoreus, Laricifomes officinalis, Morchella hortensis, Morchella angusticeps, Phellinus linteus, Auricularia auricula, Tremella fuciformis, Inonotus obliquus, Fomes fomentarius, Laetiporus sulphureus, Bridgeoporus nobillismus, Cordyceps sinensis, Cordyceps militaris, Xylaria nigripes, Tuber melanosporum, Tuber magnatum, Polyporus umbellatus.*

Generally, the invention does not contemplate use of the following fungi: Rhizopus chinensis, R. oligosporus, Aspergillus flavusoryzae, A tamari, A. niger, A. nidulans, A. sojae, Fusarium venenatum, F. graminearum, Saccharomyces cerevisiae, S. exiguus, S. pombe, Saccharomycopisis (Candida) lipolytica, Candida utilis, C. krusei or C. tropicalis, Pichia saitoi, Kluyveromyces fragilis, Endomycopsis fibuliger, the Ascomycete Chaetomium, Zygosaccharomyces rouxii, Mucor racemosus, Geotrichum candidum, Penicillium camemberti, P. notatum, P. griseofulvuum, P. grisea, P. chrysogenum, P. roqueforti, P. nalgiovense, Neurospora intermedia, Amylomyces rouxii, Endomycopsis burtonii, Psycilocibin, Monascus purpureus, Debaryomyces hansenii, Ashbya gossypii, Blakeslea trispora, Tolypocladium niveum, T. inflatum, Streptomyces, Neocosmospora, Stachybotrys, *Beauveria, Cephalosporium acremonium, C. acremonium, Gibberella fujikuroi, Fusidium coccineum, Monascus ruber, Claviceps fusiformis, C. paspali, C. purpurea, Aminita muscaria,* or *A*. *phalloides.*

Fungal components useful in the methods disclosed herein may be prepared by methods as described herein. For example, a pure strain of fungus may be used. In some methods, the pure strain of fungus is able to effectively grow on and/or myceliate the prepared cacao beans or other agricultural substrate to prepare the myceliated products. Any strain of fungus identified herein which is capable of effectively growing on and/or myceliating prepared cacao beans or other agricultural substrate can be used.

Fungal components may be prepared by methods as described herein. For example, a pure strain of fungus may be used. It was surprisingly found by the inventors of the instant invention that some fungal strains of a particular species have enhanced and/or increased ability to grow on, metabolize or otherwise utilize and/or modify cacao beans or other agricultural substrate and/or remove one or more undesirable taste components from the cacao beans or other agricultural substrate and/or better tolerate the presence of cacao beans or other agricultural substrate (or extract) in media. In one method, the undesirable taste component is methylxanthines, such as theobromine and/or 2-methoxy-3-isopropylpyrazine. In another, the fungal component reduces or removes caffeine from cacao beans or other agricultural substrate.

Methods described herein may have as an optional additional step a method of selecting a fungal component having an enhanced and/or increased ability to grow on, metabolize or otherwise utilize and/or modify cacao beans or other agricultural substrate and/or remove one or more undesirable taste components from the cacao beans or other agricultural substrate, and/or remove caffeine and/or better tolerate the presence of cacao beans or other agricultural substrate (or extract) in media. This method comprises screening a number of strains of a desired fungal species to select for a suitable fungal component (strain) which exhibits the enhanced and/or increased ability to grow on, metabolize or otherwise utilize and/or modify cacao beans or other agricultural substrate and/or remove one or more undesirable taste components and/or caffeine from the cacao beans or other agricultural substrate, and using these selected strains in the methods of the invention.

In one method, a suitable strain will generate a distinctively dark ring of coffee matter around the perimeter of the colony on a petri plate, showing that the strain rejects and actively excludes certain aspects of coffee as a food source. The dark color of the ring, without being bound by theory, shows that chlorogenic acid is rejected as a food source and removed/volatilized away from the strain, and/or is being digested prior to fungal overgrowth.

In one method, a pure strain of any commercially available *Ganoderma lucidum* is used as the fungal component. While all strains of *Ganoderma lucidum* are effective for the present invention, it was surprisingly found that some selected strains have the enhanced abilities useful for the present invention as described herein. One such strain useful for the fungal component of the present invention is *Ganoderma lucidum* strain 806, (Alice Chen; Buffalo, NY; 4/94) commercially available from Pennsylvania State University (The Pennsylvania State University Mushroom Culture Collection, available from the College of Agriculture Sciences, Department of Plant Pathology and Environmental Microbiology, 117 Buckhout Laboratory, The Pennsylvania State University, University Park, Pennsylvania, USA 16802). These selected strain(s) were deposited with ATCC as described hereinbelow

This strain was surprisingly determined by the present inventors to more efficiently grow on, metabolize or otherwise utilize and/or modify cacao beans or other agricultural substrate and/or remove one or more undesirable taste components from the cacao beans or other agricultural substrate, including chlorogenic acid and/or better tolerate the presence of cacao beans or other agricultural substrate (or extract) in media. This strain can remove and/or reduce the amount of caffeine in cacao beans or other agricultural substrate. Therefore, in one method, the fungal component is *Ganoderma lucidum* strain 806 Alice Chen; Buffalo, NY; 4/94. These selected strain(s) were deposited with ATCC as described hereinbelow.

In one method, a pure strain of any commercially available *Cordyceps sinensis* is used as the fungal component. While all strains of *Cordyceps sinensis* are effective for the present invention, it was surprisingly found that some selected strains have the enhanced abilities useful for the present invention as described herein. One such strain useful for the fungal component of the present invention is *Cordyceps sinensis* (Strain 1009 Caterpillar Fungus; Colorado Corp, 1/2014), commercially available from Pennsylvania State University (The Pennsylvania State University Mushroom Culture Collection, available from the College of Agriculture Sciences, Department of Plant Pathology and Environmental Microbiology, 117 Buckhout Laboratory, The Pennsylvania State University, University Park, Pennsylvania, USA 16802).

This strain was surprisingly determined by the present inventors to more efficiently grow on, metabolize or otherwise utilize and/or modify cacao beans or other agricultural substrate and/or remove one or more undesirable taste components from the cacao beans or other agricultural substrate, including methylxanthines, such as theobromine and/or 2-methoxy-3-isopropylpyrazine and/or better tolerate the presence of cacao beans or other agricultural substrate (or extract) in media. This strain can remove and/or reduce the amount of caffeine in cacao beans or other agricultural substrate. Therefore, in one method, the fungal component is *Cordyceps sinensis* (Strain 1009 Caterpillar Fungus; Colorado Corp, 1/2014). These selected strain(s) were deposited with ATCC as described hereinbelow.

Similarly selected strains for *H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus,* for example, (or for any species of fungi mentioned herein) were obtained by screening a number of strains of each species to select for a suitable fungal component (strain) which exhibits the enhanced and/or increased ability to grow on, metabolize or otherwise utilize and/or modify cacao beans or other agricultural substrate and/or remove one or more undesirable taste components and/or caffeine from the cacao beans or other agricultural substrate, and/or is better able to tolerate the presence of cacao beans or other agricultural substrate, and using this selected strain(s) in the methods of the invention. Therefore, in some methods, the selected strain(s) of *H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus* are used in the processes disclosed herein. These selected strain(s) were deposited with ATCC as described hereinbelow.

In one method, a pure strain of *Tuber melanosporum* is commercially obtained. In another, at least one strain is generated from wild truffle mushroom(s) and used as the fungal component. Although antibiotics may be used in the culture, more vigorous growing strains were found where culture medium lacked antibiotics. For example, a pure strain comprising a strain maternal to the original truffle mushroom can be generated by culturing on undefined agar comprising oak leaves and oak twigs. A pure strain comprising a strain paternal to the original truffle mushroom can be generated by culturing on undefined agar comprising oak leaves and oak twigs. A pure strain comprising a strain comprising a cultivar derived from non-sexual genetic recombination or anastomosis of both the maternal and the paternal mating types can be generated by culturing on undefined agar comprising oak leaves and oak twigs. In some methods, appropriate isolates (strains) to use include isolates that result in a pleasant flavorful aroma/taste in the myceliated coffee, reminiscent of flowers (in some methods, achieved by the maternal strains to a truffle mushroom as described herein), or isolates (strains) that result in a pleasant flavorful aroma/taste, reminiscent of truffles, (in some methods, achieved by a cultivar derived from non-sexual genetic recombination or anastomosis of both the maternal and the paternal mating types, as described herein). These selected strain(s) were deposited with ATCC as described herein.

Methods described herein may include screening a number of strains of *T. melanosporum,* created as described above, to select for a suitable fungal component which exhibits the enhanced and/or increased ability to grow on, metabolize or otherwise utilize and/or modify cacao beans or other agricultural substrate and/or remove one or more undesirable taste components and/or caffeine from the cacao beans or other agricultural substrate, and/or is better able to tolerate the presence of cacao beans or other agricultural substrate, and using this selected strain(s) in the methods of the invention. These selected strain(s) were deposited with ATCC as described herein.

Strains mentioned herein are publically available from The Pennsylvania State University Mushroom Culture Collection, available from the College of Agriculture Sciences, Department of Plant Pathology and Environmental Microbiology, 117 Buckhout Laboratory, The Pennsylvania State University, University Park, Pennsylvania, USA 16802, and from Fungi Perfecti, PO Box 7634, Olympia, WA 98507, USA.

All strains referenced herein are deposited with the ATCC at 10801 University Boulevard, Manassas, Virginia 20110-2209 USA under the Budapest Treaty provisions. The deposit will irrevocably and without restriction or condition be available to the public upon issuance of a patent and will be maintained under the terms of the Budapest Treaty on the International Recognition of the Deposit of Microorganisms for the Purposes of Patent Procedure. These deposits were made merely as a convenience for those of skill in the art and are not an admission that a deposit is required under 35 U.S.C. §112. However, it should be understood that the availability of a deposit does not constitute a license to practice the subject invention in derogation of patent rights granted by government action. The deposit will be maintained without restriction in the ATCC Depository, which is a public depository, for a period of 30 years, or 5 years after the most recent request, or for the enforceable life of the patent, whichever is longer, and will be replaced if it ever becomes nonviable during that period.

### MAINTENANCE AND ADAPTATION OF FUNGAL COMPONENT

Fungal components may be prepared by methods as described herein. For example, in one method, the fungal component is optionally grown, maintained and/or propagated in an undefined medium comprising cacao beans or other agricultural substrate extract prior to use for inoculation of the cacao beans or other agricultural substrate. In one method, the fungal component is indefinitely maintained in the undefined medium comprising cacao beans or other agricultural substrate extract in the solid-state, floating, and submerged morphologies of various volumes.

Where the agricultural substrate is cacao beans, the extract of cacao beans may be replaced or spiked by flavor components of the cacao bean which are desired to be minimized, metabolized, reduced or removed. For example, cacao flavor components may be used, such as 2-methoxy-3-isopropylpyrazine and methylxanthines, such as theobromine, obtained commercially as chemical compounds, added to the media as a 0.1 M buffer solution through an in-line filtered syringe. The relative proportions of the flavor components can be adjusted or balanced in the media to achieve specific flavor profile goals. This training can also be used to train, adapt the fungal component to produce desirable components such as pyrazines, for example, methyl pyrazine.

Without being bound by theory, the inventors believe that maintenance of the fungal component on undefined media comprising cacao beans or other agricultural substrate plays an important role in the long-term viability and health of the fungal component. It is believed that the perpetual and subtle changes made from batch to batch of agar and liquid media when using undefined medium comprising cacao beans or other agricultural substrate effectively avoids the phenomenon of undesirable genetic drift that will occur over time to the fungal component when are maintained on identical (defined) media.

The undefined medium comprising cacao beans or other agricultural substrate extract may be made by a number of methods. In one method, the undefined medium comprises pure aqueous cacao beans or other agricultural substrate extract. Optionally, additional energy sources can be added. Materials are optionally organic and water at least RO filtered. It has been surprisingly found by the inventors that the medium may comprise aqueous cacao or other agricultural substrate extract without any additional added excipients, such as an additional energy source for growing fungi of the present invention.

Solid media comprising undefined medium comprising cacao beans or other agricultural substrate extract. In one method, undefined medium comprising cacao beans or other agricultural substrate agar media to grow fungi for the eventual purpose of myceliating sterilized cacao beans or other agricultural substrate can comprise filtrate of cacao beans or other agricultural substrate. In one method, 0.1 - 100 lbs. of cacao beans or other agricultural substrate are in 0.1 - 100 L of water, respectively, for 1 minute to 12 hours. The filtrate was collected through 1 - 3 filtrations of the mixture, and 14-17 g/L of agar was added. The base extract solution can be used alone, or co-mixed with vegetable extracts and/or additional sugar sources such as fruit juice.

This base solution can be optionally mixed with the filtrate of undefined vegetable (of any type but ideally organic) aqueous extract, such as malt extract, yeast extract, potato, etc. In one method the vegetable is potato. Aqueous potato mixture can be prepared by softening 1 - 300 g of potato mass in boiling or pressurized water, mashed, and the filtrate was collected through 1-3 filtrations. Optionally, fruit juice with no added sugars can also be added to the base cacao beans or other agricultural substrate agar media. In one method, the medium comprises 0.1-10 % by weight of malt extract, 0.1-10 % by weight undefined vegetable extract with essence of cacao bean, 0.1-10 % by weight of yeast extract, 0.1-10 % by weight of peptone, 0.1-10% by weight of glucose, 20-80 % by weight of water, and 1-90% by weight whole cacao beans or other agricultural substrate or green coffee bean extract.

As a non-limiting example of the media, for example, 2 lbs cacao beans or other agricultural substrate, either pulverized or whole can be mixed with ¼ gallon water at room temperature. The mixture may be blended. The mixture is then allowed to extract for 20 minutes with shaking, then filtered three times through fine mesh. This solution can be used alone, or mixed with the following: about 5 organic potatoes are placed in 10 L of water and autoclaved 20 minutes to soften the potatoes. The potatoes are then pulverized with a potato masher, and then filtered through fine mesh three times. 1 L of commercial unsweetened fruit juice can be added. The potato extract is added to the cocoa extract and autoclaved.

In another method, the media may comprise a chocolate liquor, which can be made by methods known in the art, such as obtaining a fine ground which is a liquid. The liquor can be used neat or can be diluted as desired. A chocolate liquor media should be agitated.

Once prepared, the media can be sterilized by any method known in the art. Once the media is cooled, can be poured into petri plates and fungal cultures were propagated from plate to plate in sterile operation, as known in the art. Slants for test tubes and flasks may be prepared by this method. Petri plates can be inoculated with floating and submerged liquid tissue culture, and with myceliated substrate.

Liquid media undefined medium comprising cacao beans or other agricultural substrate extract. Cacao beans or other agricultural substrate extract, and undefined vegetable extract were prepared as described for solid media, except that no agar is added. If preparing to make a floating culture, 1 - 10 tablespoons of flour was added to the mixture, in one method, about 1 tablespoon per 10-15 L of culture. The media can be sterilized by methods known in the art. Once cooled, the vessel can be inoculated in sterile operation with a colonized section petri plate, from other liquid tissue cultures, or from samples of myceliated substrate.

The fungal component for inoculation into cacao beans or other agricultural substrate can be prepared by submerged liquid tissue culture using the undefined medium comprising cacao beans or other agricultural substrate extract liquid media as defined herein and agitated on a shaker table. In one method, the agitation rate is 50-240 rpm, or 85-95 RPM, and incubated for 4-90 days. In one method, the temperature of incubation is 87-89 °F.

In one method, the fungal component is trained and/or adapted and/or maintained in its ability to efficiently grow on, metabolize or otherwise utilize and/or modify cacao beans or other agricultural substrate. In one method, the fungal component is selected and/or trained and/or adapted and/or maintained in its ability to remove or reduce one or more undesirable taste components from the cacao beans or other agricultural substrate or to remove or reduce the amount of caffeine. Methods to determine whether an undesirable taste component and/or caffeine has been reduced or removed has been disclosed herein and also be found in the art.

In one method, the trained and/or adapted and/or maintained fungal component is prepared from disinfected wild and healthy fungi. Such fungi with changed, improved, and adapted properties as described herein, relative to the starting strains, either selected or unselected, were developed by these methods. These adapted strains were deposited with the ATCC as described elsewhere herein. In one method, the trained and/or adapted and/or maintained fungal component is prepared from *Ganoderma lucidum.* In one method, the trained and/or adapted and/or maintained fungal component is prepared from *Ganoderma lucidum* strain 806 Alice Chen; Buffalo, NY; 4/94. In another method, the trained and/or adapted and/or maintained fungal component is prepared from *Cordyceps sinensis* (Strain 1009 Caterpillar Fungus; Colorado Corp, 1/2014). In one method, the trained and/or adapted and/or maintained fungal component is prepared from *H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus.* In one method, the trained and/or adapted and/or maintained fungal component is prepared from a pure strain of *Tuber melanosporum,* obtained by culturing a truffle mushroom by the methods described herein. These fungi having changed, improved, and adapted properties as described herein, relative to the starting strains, were deposited with ATCC as described herein.

The training and/or adaption and/or maintenance step as described herein can be optionally conducted on undefined medium comprising cacao beans or other agricultural substrate extract liquid media or solid media as defined herein. In one method, the fungi may be cultivated for 4 - 90 days at any temperature known in the art for cultivating fungi, for example, 87 - 89 °F. Re-inoculation of the cultivated fungal component into fresh media as described herein can be performed at an appropriate time as determined by one of skill in the art depending on the growth rate, growth cycle, and appearance of the fungal component. The cycle of growth and re-inoculation of the fungal component into fresh media, in some methods, is performed more than one time, more than two times, more than three times, more than four times, more than five times, more than ten times, more than fifteen times, more than twenty times, more than twenty five times, more than thirty times, more than forty times, more than fifty times, more than seventy five times, or one hundred times or more. The fungal component by these methods can, for example, better recognize cacao beans or other agricultural substrate or any particular component of cacao beans or other agricultural substrate as an energy source, better tolerate the presence of cacao beans or other agricultural substrate extract in media (as measured by an enhanced growth rate, for example), better remove undesirable taste components, or better remove caffeine. In one method, the undesirable taste component to be removed and/or reduced is methylxanthines, such as theobromine or 2-methoxy-3-isopropylpyrazine.

Therefore, the methods have as an optional additional step, a method of preparing a trained and/or adapted and/or maintained fungal component comprising a fungal component having an enhanced and/or increased ability to grow on, metabolize or otherwise utilize and/or modify cacao beans or other agricultural substrate and/or remove one or more undesirable taste components from the cacao beans or other agricultural substrate, and/or remove caffeine. Thus use of the trained and/or adapted and/or maintained fungal component is contemplated for the present invention. The methods further comprise use of any of the trained, adapted, and/or maintained fungal component(s) as described herein.

### PREPARATION OF FUNGAL COMPONENT FOR INOCULATION OF CACAO BEANS OR OTHER AGRICULTURAL SUBSTRATE

Methods for preparing the fungal component to inoculate the prepared cacao beans or other agricultural substrate may include scaling up a fungal component as defined herein in liquid culture. Such fungal component which is readied for inoculation of the prepared cacao beans or other agricultural substrate is called a "prepared fungal component."

In a method described herein, the prepared fungal component is in solid culture. In another, the prepared fungal component is in liquid culture. In another the prepared fungal component is a mixture of solid and liquid culture. Liquid culture can be accomplished by any means known in the art and includes use of a bioreactor. For example, when using a bioreactor to prepare the fungal component, the bioreactor can be prepared by diluting undefined medium comprising cacao beans or other agricultural substrate extract liquid media up to 1000x with filtered/RO water. The jacket of the bioreactor may be steamed in one method to sterilize the media, or alternatively, the media can be sterilized by way of injecting steam into the vessel.

The media to use in preparation of a fungal component for use to inoculate the prepared cacao beans or other agricultural substrate, may be any suitable media known in the art, or may be made by the methods disclosed herein. The media may further comprise trace elements and organic substances such as water, nucleic acids, and minerals. The media may be diluted up to 1000x with filtered/RO water. Dilution can be 1x, about 2x, about 3x, about 4x, about 5x, about 6x, about 7x, about 8x, about 9x, about 10x, about 15x, about 20x, about 25x, about 30x, about 35x, about 40x, about 45x, about 50x, about 55x, about 60x, about 65x, about 70x, about 80x, about 90x, about 100x, about 150x, about 200x, about 250x, about 300x, about 350x, about 400x, about 450x, about 500x, about 550x, about 600x, about 650x, about 700x, about 750x, about 800x, about 850x, about 900x, about 950x or about 1000x. In some methods, the dilution is about 5x to about 100 x. For a 100 L bioreactor, media can be diluted about 10x, for example.

In one method, to inoculate the reactor, media may be pumped from another reactor through a sterilized line with an inline pump, or creating positive pressure by sparging air into the reactor with an air compressor that runs the air through inline 0.2/0.5 micron capsule filters then through a check valve with a specific cracking pressure, for example, 2-3 psi.

Methods to inoculate the bioreactor to prepare the fungal component include inoculating the bioreactor with an excised colonized section of Petri plate and/or a sample of liquid culture using sterile procedure, or by pouring a floating or submerged liquid tissue culture into the bioreactor through the nozzle.

Optionally, the fungal component may be agitated during culturing by methods known in the art. For example, in a bioreactor, the agitation may be accomplished by a combination of sparged air and a motorized paddle which allows both a turbulent environment and shear mechanical force. The inventors, without limitation, have found that the combination is superior to running either method individually, as sparged air creates the most turbulence at the top half of the culture, while affecting the bottom less, which can be kept agitated by a motorized paddle, while the paddle does not have to run at such a high RPM as normally used in the art. The combination creates the proper small hyphal sphere sizes without damaging the mycelia.

Liquid state fermentation agitation and swirling techniques are known in the art and include mechanical shearing using magnetic stir bars, stainless steel impellers, injection of sterile high pressure ambient air, injection at high-pressure of sterile media, and or the use of shaker tables. Higher agitation and swirling rates, in conjunction with air and media injections, produce small mycelial spheres.

The fungal component can be grown until ready for inoculation of the prepared cacao beans or other agricultural substrate as determined by one of skill in the art. In some methods, the fungal component can be grown for 48 hours prior to use in inoculating the cacao beans or other agricultural substrate. Determination of whether the fungal cultures comprising the fungal component are suitable for inoculation of the prepared cacao beans or other agricultural substrate can be determined by one of skill in the art. For example, in one method, the fungal culture, when in liquid media, is suitable for inoculation while in exponential growth phase, either early or late. Senescent cultures and cultures in earlier growth phases with lower amounts of mycelia/mL can be used, but are not preferred. The prepared fungal component optionally appears well grown through in the media, with visible mycelia growing through every mL visible by microscope and unassisted vision.

In order to effect the most efficient myceliation of the cacao beans or other agricultural substrate, the fungal component have defined hyphal sphere sizes which enables hyphae growth in three dimensions around the spherical conglomeration of the culture of the fungal strain. In one method the hyphal sphere size is less than 10 mm in diameter, less than 2 mm in diameter, less than 1 mm in diameter, less than 100 microns in diameter, less 10 microns in diameter, less than 5 microns in diameter, less than 2 microns in diameter, or less than 1 micron in diameter. In another method, the hyphal spherical conglomeration has a size range of 5 microns to 1 millimeter in diameter, or, a size range of 10-50 microns in diameter.

These methods result in a prepared fungal component for inoculation of prepared cacao beans or other agricultural substrate.

### INOCULATION AND MYCELIATION OF THE PREPARED CACAO BEANS OR OTHER AGRICULTURAL SUBSTRATE

The prepared cacao beans or other agricultural substrate are inoculated with the prepared fungal component. The prepared fungal component to be used can be any fungal component as defined herein. The inoculation of the prepared fungal component onto the prepared cacao beans or other agricultural substrate can be carried out by any method known in the art. This step may be variously referred to as the culturing step, the fermentation step, and/or the myceliation step.

The myceliation may take place in a container as described herein. In one method, the myceliation takes place in a 55 gallon drum as described herein. In this method, the 55 gallon drums has a lid containing two ports, and one port can be used as an inoculation port, while the other can be used to sparge in filtered air to the bottom of the culture, and simultaneously serve as a vent. In some methods, the inoculation port is a quick disconnect socket, which is attached to a quick disconnect plug at the end of a harvesting line during inoculation. Optionally, prepared cacao beans or other agricultural substrate in a plurality of drums can be myceliated in one cycle via a sterilized manifold connected to bioreactor harvesting line, with the included infrastructure to target any drum in singular or all together at once. In one method, a system for volumetrically consistent dispensing of inoculant per culture is used.

In one method, the culture may be pneumatically injected into a container comprising the prepared cacao beans or other agricultural substrate. Moisture may optionally be injected into bags to optimize mycelial growth. In another method the cacao beans or other agricultural substrate are inoculated by pouring the culture into the container holding the sterilized cacao beans or other agricultural substrate either manually or through a valve built into the fermentor or bioreactor, from any variety of liquid tissue culture.

In one method, the prepared cacao beans or other agricultural substrate are cooled to a temperature of between 80-100 ° F prior to inoculation with the prepared fungal component. Cooling may be accomplished by refrigeration or at room temperature. The step of myceliating the prepared cacao beans or other agricultural substrate can take place for between 4 and 90 days, for between about seven and twenty one days, and in one method, for about seven days, and at any temperature, for example, at 87 - 89 °F. Multiplication of the fungal mycelia by fermentation is carried out by efficiently controlling environmental light, such as by a control model of 40% lighting and 60% dark, and also by controlling sterile airflow and temperature at 86-88 or 87 - 89 ° F, or between 12 and 35 °C, or between 24 °C to 32 °C.

Relative humidity of this culturing, myceliation and/or fermentation is between 20% and 80%, in some methods, at least about 60%. In some methods, the relative humidity is at least about 36-40%.

In an alternate method, prior to addition of the fungal component, the cacao beans are prepared for liquid myceliation (fermentation) culture. The cacao beans are ground into fine particles, preferably, less than 1 mm in diameter as approximate particle size. In one method, the particles are 20-50 microns in size. The cacao beans are then placed into aqueous solution that has a viscosity regulated or adjusted to suspend the cacao particles. Preferably, the aqueous solution has a viscosity adapted to the cacao particle size to enable the cacao particles to be suspended in the aqueous solution when agitated. The aqueous media containing the fungal component and the cacao particles can be deposited in a bio-reactor of any size. Preferably the bio-reactor is sized to hold at least 10 liters of aqueous media. More preferably, the bio-reactor is sized to hold several thousand liters, or more.

In one method, the liquid myceliation culture is agitated. The agitation means is regulated to optimize the aqueous solution to maintain the mass of fungal mycelium in small particles. Preferably the fungal mycelium will have hyphael spheres, or conglomerations, having sizes that are between 1-100 microns in diameter. In another method, the hyphael conglomerations are smaller than the particle size of the cacao.

In liquid myceliation culture, the bio-reactor is maintained at a suitable temperature and pressure to enable the mycelium to digest components of the cacao in a facultative anaerobic environment. After the mycelium has digested components of the cacao to remove bitter flavor components, the cacao is separated from the aqueous solution. This can be done by ceasing agitation and allowing the cacao to precipitate. This can also be accomplished by filtering the cacao from the aqueous solution. After the cacao is removed from the aqueous solution, it may be prepared for processing (including drying the cacao into a powder). A secondary step is optionally performed to extract the aqueous solution after removal of the cacao. This extract can be used to recover water-soluble flavor components of the cacao. These water-soluble flavor components may be processed and may be added back to the cacao either as a powder or an aqueous spray or bath. Cacao powder is the result. Supplemental flavor is added, as needed, to further improve the flavor of the cacao. For example sweeteners or cacao flavor extracts may be added at this juncture in the process.

Accordingly, the cacao is ready to form into any cacao product i.e. chocolate.

The step of myceliating the prepared cacao beans or other agricultural substrate is preferably accomplished in an anaerobic or semi-anaerobic environment. Methods known in the art can be used to induce and/or maintain facultative anaerobic metabolic activity of the prepared fungal component as described by the Pasteur effect. In an alternate method, the cacao beans or other agricultural substrate are removed from the sheets and deposited in large stainless steel vats in a sterile environment. The vats regulate oxygen levels and temperature, and enable the facultative anaerobic activity and mycelial growth on the prepared cacao beans or other agricultural substrate. Facultative anaerobic activity metabolizes more cellulose of per unit of time, meaning that the cacao beans or other agricultural substrate substrate is consumed at a more rapid rate than in an aerobic environment. In some cases mycelial growth is nine times faster than in an aerobic environment (that is, nine times more cellulose molecules are metabolized to ATP). Another benefit is that the anaerobic environment inhibits fruiting body growth. An anaerobic environment also assures a reduction in unwanted bacterial growth, and other unwanted microbial growth.

Expansion of the fungus mycelia is monitored by microscopy, and schedules of growth documented by photography.

The longer the incubation period, the greater the production of the mycelium dry weight and the greater the flavor enhancement of the cacao beans or other agricultural substrate. Some strains will form primordial tissue and fruit bodies by 30 days (*Hericium erinaceus* is particularly prone to fruiting while in culture, as is *Ganoderma lucidum* and *Flamulina velutipes*)*.* In some methods, harvesting the myceliated cacao beans or other agricultural substrate beans is performed before the culture fruits body tissue. However, a prolonged period of incubation of a specific fungus does not guarantee a high production of metabolite or the accumulation of mycelia and/or myceliation products.

Determination of when to harvest the myceliated product may be determined by a number of methods. Harvesting is generally performed with a timing to optimize the taste profile of the myceliated product according to the taste profile desired. For example, the scent profile of the myceliation culture can be used by the trained person to determine when the culture is ready. Determination of the appearance of the culture may also be done by the trained person. In some methods, harvesting can be done when the amount of the mycelia in the culture are in the approximate amount of 2-3 fully grown (standard size) petri plates (for *G. lucidum*)*,* or when the amount of the mycelia are in the approximate amounts of 10-12 fully grown standard petri plates (for *C*. *sinensis*), per 8 lbs of cacao beans or other agricultural substrate. Analytical methods of analysis including high performance liquid chromatography (HPLC) may be employed to carry out measurement of total biomolecules in order to determine the optimum composition and cultivation conditions and the appropriate time(s) for harvesting the fungi.

In a non-limiting example, about 8 lbs of prepared cacao beans or other agricultural substrate according to the processes of the invention, in a sealed container as described herein, was inoculated with about 25 ml of prepared fungal component as described herein. A lowered oxygen environment was obtained. The myceliation or culturing was allowed to proceed for seven days at 87 - 89 °F, although as little as four days or as long as sixty or more days is also suitable. Harvesting was performed when observers determined that an appropriate taste profile for the myceliated product had been obtained.

### REDUCTION OF UNDESIRABLE TASTE COMPONENTS DURING MYCELIATION

Cacao beans and other agricultural substrates may contain undesirable taste components. Such undesirable taste components may be defined or undefined. One such unfavorable taste component includes 2-methoxy-3-isopropylpyrazine. This component is metabolized by the fungal component into polysaccharides, such as beta 1,3-glucans and beta 1,6-glucans. Other undesirable taste components include bitter taste components. One such bitter component is methylxanthines, such as theobromine. Myceliating raw cacao yields a cacao bean that is less bitter that raw cacao that is not myceliated.

Myceliation of cacao also causes the shell of the bean to be more easily winnowed for advantages in processing the cacao beans.

The step of culturing or myceliation may also cause reduction and/or removal of undesirable taste components as described herein and/or caffeine. In some methods, determination of the extent of the removal of at least one undesirable taste component is determined by the appearance, taste and/or chemical composition of the myceliated product as is known in the art. This determination may be quantitative, e.g., the chemical composition of the myceliated product may be measured by assay methods for one or more of the undesirable taste components by assay methods as known in the art, or determined qualitatively by taste testing by skilled persons.

In one method, up to 5% of one or more of the undesirable taste components are removed; in other methods, up to 10%, up to 15%, up to 20%, up to 25%, up to 30%, up to 35%, up to 40%, up to 45%, up to 50%, up to 55%, up to 60%, up to 65%, up to 70%, up to 75%, up to 80%, up to 85%, up to 90%, or up to 95% of one or more of the undesirable flavor components are removed in the processes of the instant invention. In one method, one or more of the undesirable flavor components are quantitatively removed. The disclosure also relates to myceliated products having reduced levels of undesirable taste components as described herein.

In one method, the undesirable taste component is chlorogenic acid and up to 5% of chlorogenic acids are removed; in others, up to 10%, up to 15%, up to 20%, up to 25%, up to 30%, up to 35%, up to 40%, up to 45%, up to 50%, up to 55%, up to 60%, up to 65%, up to 70%, up to 75%, up to 80%, up to 85%, up to 90%, or up to 95% of chlorogenic acids are removed in the processes of the instant invention. The disclosure also relates to myceliated coffee products having reduced levels of chlorogenic acid as described herein.

In one method, caffeine is removed from the cacao beans or other agricultural substrate during the culturing or myceliation step. In one method, up to 5% of caffeine is removed; in others, up to 10%, up to 15%, up to 20%, up to 25%, up to 30%, up to 35%, up to 40%, up to 45%, up to 50%, up to 55%, up to 60%, up to 65%, up to 70%, up to 75%, up to 80%, up to 85%, up to 90%, or up to 95% of caffeine is removed in the processes of the instant disclosure. The disclosure also relates to myceliated products having reduced levels of caffeine as described herein.

Removal of undesirable taste components may allow for increasing the value of poorer quality cacao or other agricultural products and/or rendering it more edible. Myceliated products produced by this method may be used to blend with less expensive cacao beans or other agricultural substrate leading to a lower cost product having improved taste properties. The amount of sugar, milk and substitutes thereof to be added to the myceliated products may be reduced. The instant methods lead to enhanced flavor profile of the myceliated products due to a perception that the myceliated products provide a richer, smoother, and/or sweeter food with less bitter, harsh, and/or acidic tastes.

### ADDITION OF FLAVOR AND/OR HEALTH PROMOTING COMPONENTS

The culturing or myceliation processes of the instant disclosure, in some methods, provide a myceliated cacao beans or other agricultural substrate product with added flavor and/or heath promoting components. For example, the myceliated cacao beans or other agricultural substrate products may contain exogenously added anti-tumor and immunomodulatory health promoting components.

Fungi are metabolically similar to animals but structurally similar to plants in that they possess a rigid cell wall formed largely of long sugar molecule chains joined by somewhat difficult to digest beta (b-) linkages and to a smaller extent more easily digestible alpha (a-) linkages in conjunction with membrane-bound proteins. In contrast, plant cell walls (such as cacao beans or other agricultural substrate) are made of cellulose polysaccharides whose 1->4 glycosidic glucose linkages are likewise difficult to for humans to digest, but are digestable by fungi. Fungi cell walls are primarily composed of 1->3 glycosidic linkages, with 1->6 linked side chains, and therefore they may be broken down by minimal processing using water, heat and mechanical treatment into smaller, more easily digestible, immunologically-active polysaccharide molecules of variable microparticulate size called beta glucans, and related glycoprotein compounds. The immune response to beta glucan is dependent upon a- or b-glucan structure, which has primary, secondary, and chiral tertiary structures, explaining the differences in immune response to each fungi's unique a- and or b-glucan profile. Thus, myceliated cacao beans or other agricultural substrate products have added health promoting components including the molecules described above. Other health promoting components present in the myceliated cacao beans or other agricultural substrate products may be components that have various properties such as immunomodulating, anti-aging, aphrodisiac, anti-tumour, anti-viral, anti-bacterial, and or anti-fungal properties and include compounds such as a- and b-glucans, glycoproteins, proteins, ergosterols, sterols, triterpenes, and fatty acids, glucomannan, riboglucan, sterpuric acid, mannitol, ribitol, guanosine and adenosine.

Methyl pyrazines, which develop naturally in cacao, are among the most important desirable flavor compounds found in cacao. In the presence of heat, such as roasting, they are produced through Maillard reactions i.e. between sugars and amino acids or peptides. Without being bound by theory, it is believed that methyl pyrazines are also be produced through fermentation and/or myceliation, which leads to increased and/or altered methyl pyrazines in myceliated cacao beans and other agricultural products. Using this method of manufacture of cacao, a single strain of fungi decomposes the cellulose, alkaloid, fat, and protein content contained in the raw, sterilized cacao beans which gives cacao bitter taste and changes the substance structure and concentration of the cacao beans. On the other hand, a uniform and consistent quality of cacao is obtained by this invention's method of fermentation for processing raw cacao beans. By utilizing methods disclosed herein induced by this clean fermentation process, the flavor of raw cacao beans is enhanced, making the resulting cacao much richer, smoother, sweeter, and unique (compared to plain cacao made from un-myceliated beans).

The reactive carbonyl group of the sugar reacts with the nucleophilic amino group of the amino acid, and forms a complex mixture of poorly characterized molecules responsible for a range of odors and flavors. This process is accelerated in an alkaline environment (e.g., lye applied to darken pretzels), as the amino groups are deprotonated and, hence, have an increased nucleophilicity. The type of the amino acid determines the resulting flavor. This reaction is the basis of the flavoring industry. At high temperatures, acrylamide can be formed.

*Agaricus blazei* may be used for addition of unique a- and blinked glucans called glucomannan and riboglucan, which are antiviral, into the myceliated cacao beans or other agricultural substrate product. Other *A*. *blazei* polysaccharide extracts may have anti-cancer effects and may be co-therapeutic with other mycelial extract of Fungi listed herein. Methods to optimize biomass and extracellular polysaccharide production have been reported. Therefore, Therefore, myceliation with *A*. *blazei* and myceliated cacao beans or other agricultural substrate products containing flavor and/or health promoting components derived from *A*. *blazei* as described herein are also included in the instant invention.

*Cordyceps sinensis* (*C. sinensis*) produces cordycepic acid, adenosine, D-mannitol, and cordycepinadenosine which are immunomodulating and anti-viral. *C. Sinensis* extracts have been shown to be anti-aging and aphrodisiacal. Mycelial sterols isolated from *C. sinensis* have been shown to inhibit the proliferation of numerous cancer cell lines. *C. sinensis* mycelial polysaccharide extracts have been shown to induce hypoglycemia. Therefore, myceliation with *C. sinensis* and myceliated cacao beans or other agricultural substrate products containing flavor and/or health promoting components derived from *C. sinensis* as described herein are also included in the instant disclosure.

*Flammulina velutipes* mycelium has been shown to have a polysaccharide profile that is immunomodulating. *F. velutipes* mycelium composes a unique ergosterol and amino acid profile, sterpuric acid, mannitol, ribitol, and the nucleosides guanosine and adenosine, Enokipodins A-D extracted from *F. velutipes* mycelium are broad spectrum antimicrobial terpenes. The proteins flammulin and velutin exhibit anti-HIV and anti-HPV activity. Therefore, myceliation with *F. velutipes* and myceliated cacao beans or other agricultural substrate products containing flavor and/or health promoting components derived from *F*. *velutipes* as described herein are also included.

*Ganoderma lucidum's* polysaccharide profile has been shown to be immunomodulating in human cell lines and also in clinical studies. *G. lucidum* mycelial extracts have anti-peroxidative, anti-inflammatory, and anti-mutagenic properties. *G. lucidum* extracts have been shown to be anti-aging and aphrodisiacal. The triterpenoid profile of *G. lucidum* has been determined and shown to be anti-hepatotoxic and hepatoprotective, anti-tumor, anti-angiogenic, anti-hypertensive, hypocholesterolemic, anti-histaminic, and anti-HIV. *G. lucidum,* in addition to producing polysaccharides and glycoproteins, likewise produce triterpenes, such as ganoderic and lucidenic acids, phenolic compounds, and sterols which also have high biological activity and therapeutic properties and are in themselves anti-oxidant, anti-tumor, anti-bacterial, anti-cancer, anti-inflammatory, anti-histamine, hypotensive, sedative, and meditative after oral consumption. Therefore, myceliation with *G. lucidum* and myceliated cacao beans or other agricultural substrate products containing flavor and/or health promoting components derived from *G. lucidum* as described herein are also included.

*Grifolafrondosa's* polysaccharide profile has been shown to be immunomodulating and anti-oxidative, *G. frondosa* produces ergosterols and an anti-oxidative profile of fatty acids. The anti-tumor effects of *G*. *frondosa* extracts on in vitro cancer cell lines have been investigated, and shows promise for diabetes patients as being hypoglycemic. Therefore, myceliation with *G. frondosa* and myceliated cacao beans or other agricultural substrate products containing flavor and/or health promoting components derived from *G. frondosa* as described herein are also included in the instant disclosure.

*Hericium erinaceus* mycelial and fruiting body extracts have been shown to be anti-mutagenic and immunomodulatory across various cell lines. *H. erinaceus* uniquely produces hericenones in fruit bodies and erinacines in mycelium, structurally determined compounds that can pass the blood-brain barrier and promote secretion of Nerve Growth Factor (NGF) in certain regions of the brain. Erinacenes have been shown to be greater potentiators of NGF expression than hericenones. Therefore, myceliation with *H. erinaceus* and myceliated cacao beans or other agricultural substrate products containing flavor and/or health promoting components derived from *H. erinaceus* as described herein are also included.

Aspects of *Lentinula edodes'* polysaccharide profile has been determined and shown to be immunomodulating and antiviral. Lentinan and other metabolites have been studied for their numerous health care benefits. In some countries, lentinan is classified as an "antineoplastic polysaccharide" and is available for clinical use. Addition of lentinan to standard cancer therapies has been shown to result in increased tumor necrosis and with hepatocellular carcinoma and improved quality of life in patients with esophageal carcinoma. Therefore, myceliation with *L. edodes* and myceliated cacao beans or other agricultural substrate products containing flavor and/or health promoting components derived from *L. edodes* as described herein are also included.

*Phellenis linteus* extracts have been shown to exhibit antitumor activity. *Polyporus umbellatus* polysaccharide extracts have been studied and shown to be anti-cancer, immunomodulating, anti-malarial, and hepatoprotective. *Inonotus obliquus* mycelial polysaccharide extract has demonstrated anti-tumor, hypoglycemic, and anti-oxidative properties. *Pleurotus ostreatus* mycelium and fruit body composition have been shown to be very similar, differing only in amino acid content. The mycelial polysaccharide profile consists primarily of laminarin, the extract of which has been shown to be immunomodulating. Lovastatin, isolated from the mycelial broth of *P. ostreatus,* exhibits anti-carcinoma activity, inhibits growth of bacteria and Fungi, and lowers cholesterol. *Trametes versicolor* produces heteroglucans with a-(1-4)- and b-(1-3) glycosidic linkages with fucose in PSK (Krestin) and rhamnose and arabinose in PSP, have been shown to be anti-tumor and immunomodulatory. PSK, an approved drug, is a mycelial extract which exhibits immunomodulating, anti-viral, and cholesterol regulating properties. Mycelial polysachharide extracts of *Tremella fuciformis* have been shown to be therapeutic for various circulatory disorders, to be neurologically healthy, anti-carcinoma, anti-tumor, and anti-aging.

Therefore, myceliation with *Phellenis linteus, Polyporus umbellatus, Inonotus obliquus, Pleurotus ostreatus, Trametes versicolo, and*/*or Tremella fuciformis* (and any other fungal species described herein)and myceliated cacao beans or other agricultural substrate products containing flavor and/or health promoting components derived from *Phellenis linteus, Polyporus umbellatus, Inonotus obliquus, Pleurotus ostreatus, Trametes versicolo, and*/*or Tremella fuciformis* (or any other fungal species described herein) are also disclosed herein.

The amounts of flavor components or health promoting components added by the fungal component as described herein can be estimated by one of knowledge in the art, and includes up to 1 ng of the component per unit myceliated cacao beans or other agricultural substrate product, or up to 5 ng, up to 10 ng, up to 50 ng, up to 100 ng, up to 500 ng, up to 1 µg, up to 5 µg, up to 10 µg, up to 50 µg, up to 100 µg, up to 500 ug, up to 1 mg, up to 2 mg, up to 5 mg, up to 10 mg, up to 20 mg, up to 50 mg, up to 100 mg, or up to 500 mg per unit myceliated cacao beans or other agricultural substrate product. A unit of myceliated cacao beans or other agricultural substrate product can be variously defined as 1 g, 1 lb, 1 kg, and the like.

### FURTHER PROCESSING OF MYCELIATED PRODUCT

In some methods, once fully myceliated, the myceliated cacao beans or other agricultural substrate product is optionally rinsed after myceliation. Rinsing may be performed to remove some or all parts of the mycelia and/or other non-cacao beans or other non-agricultural substrate matter.

In some methods, one fully myceliated, the myceliated product is optionally dried. Drying can be accomplished by means known in the art for drying cacao beans or other agricultural substrate. For example, myceliated product may be spread on a dry surface to dry. In one method, the myceliated product is dried down to about a 11 to 13 % moisture content.

Optionally, the dried or undried myceliated product can be roasted and/or toasted by conventional methods known in the art. The optional roasting step provides for deactivating the fungus, which may be desirable to reduce the risk of mycoses.

Myceliated cacao can be subjected to known processing steps non-myceliated cacao. Accordingly the present disclosure can be used to make myceliated cacao mass, myceliated cacao butter, myceliated chocolate liquor, and all forms of chocolate derived thereof, as done by tempering, and other methods known in the art. The added benefits of such food processing involve the unique nutritional profile (primarily the polysaccharide and metabolite profile) imbued into these foods by the myceliation.

In one method, myceliated cacao bean extract is used for nutraceuticals in an extract form, or in a powdered form achieved from dehydrating the extract. In another method the myceliated cacao bean extract is used as an additive in functional foods to bolster flavor and nutrient content. This extract can be in aqueous form, infused in an alcohol base, or in vegetable glycerin, for example. A powdered form can be achieved from dehydrating the extract. The powdered form can be added to any packaged food. An example of a functional food includes a bottled drink, a snack bar, or a high-protein powder mixture used to make protein shakes. The powdered form can also be used in ice-cream.

The myceliated product may optionally be extracted to prepare an extract for use in food and/or drink products. For example, 1000 g of myceliated roasted cacao bean or agricultural substrate may be fully extracted, with agitation; using 10 to 1000 ml of 121-122°C pressurized water as a buffer, containing 0.01 % to 10 % citric acid and 0.01 to 10 % ascorbic acid. The resulting aqueous extract may be further purified and concentrated using conventional methods. Myceliated cacao bean or agricultural substrate product extracts may be given an extended shelf life by methods known in the art such as formulation in 18 % to 24 % alcohol, 45 % to 60 % glycerol, or addition of 2.5 X volumes of honey or similar sugar such as maple syrup or evaporated cane sugar.

Removal of undesirable taste components and/or caffeine, and/or addition of myceliation products which increase flavor and/or promote health, will result in myceliated cacao bean or agricultural substrate products, and, and may increase the value of poorer quality cacao bean or agricultural substrate and/or render it more edible. Myceliated cacao bean or agricultural substrate products produced by this method may be used to blend with less expensive cacao bean or agricultural substrates leading to a lower cost product having improved taste properties such as a richer, smoother, and/or sweeter food with less bitter, harsh, and/or acidic tastes.

Myceliated cacao tastes sweeter than natural cacao because mycelium removes bitter components from the bean. Accordingly, one benefit of using the myceliated cacao in functional foods is that a low sugar (or low sweetener) version of any functional food including cacao can be made to taste as good as compared with natural cacao having more sweeteners (i.e. sugar, stevia, or synthesized sweeteners).

### METHODS

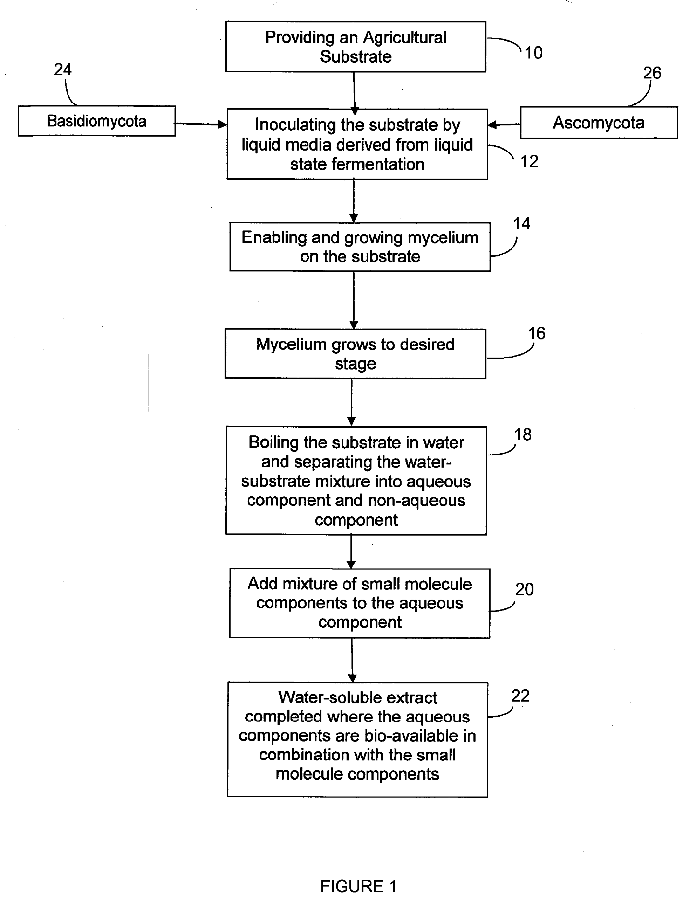

FIG. 1 shows a flow chart of one embodiment of a method of creating an extract of myceliated agricultural product (such as a myceliated coffee product) for human consumption. The step 10 provides an agricultural substrate, the step 12 inoculates the substrate by liquid media comprising an aliquot of culture derived from liquid state fermentation, the step 14 enables mycelium growth and the step 16 grows mycelium on the substrate, the step 18 includes boiling the substrate in water and separating the water-substrate mixture into aqueous and non-aqueous components after mycelium growth on the substrate reaches a desired stage, the step 20 adds a mixture of small molecule components to the aqueous components whereby the aqueous components mix in bio-available combination with the small molecule components to facilitate water solubility of the extract.

In one method, the step 24 utilizes a culture of Basidiomycota fungi to enable step 12. In an alternate method, the step 26 utilizes and Ascomycota fungi to enable step 12.

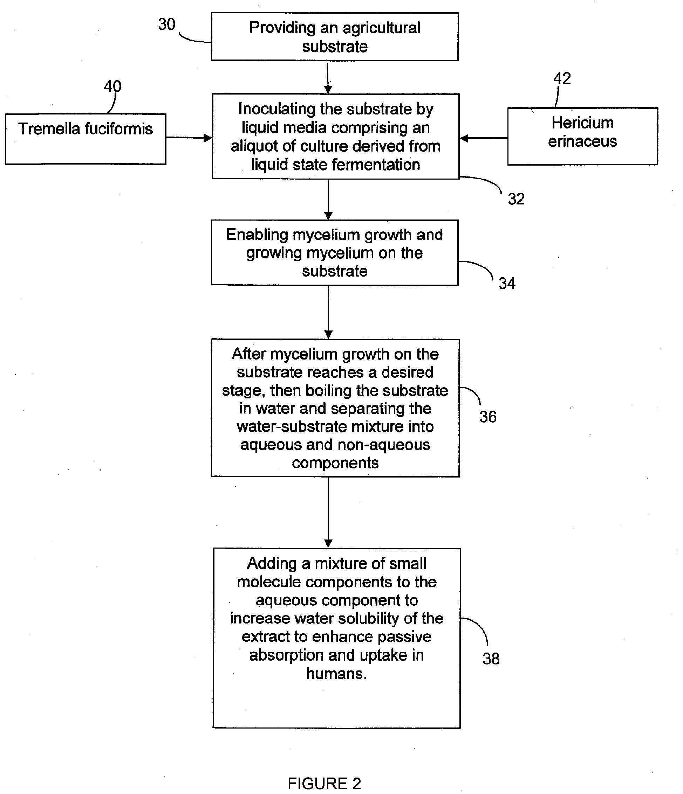

FIG. 2 shows a method of creating an extract of myceliated agricultural product for human consumption to effectuate neuroregeneration and neuro-protection in humans in accordance with the present invention.

The method includes the step 30 of providing an agricultural substrate, the step 32 of inoculating the substrate by liquid media comprising an aliquot of culture derived from liquid state fermentation, the step 34 of enabling mycelium growth and growing mycelium on the substrate, the step 36 of boiling the substrate in water and separating the water-substrate mixture into an aqueous and nonaqueous components. Step 36 occurs after mycelium growth on the substrate reaches a desired stage. The step 38 adds a mixture of small molecule components to the aqueous components to increase water solubility of the extract to enhance passive absorption and uptake in humans.

The step 32 of inoculating includes the step 40 of inoculating with a fungal component of the present invention.

The step 34 of enabling and growing mycelium on the substrate includes regulating temperature and humidity in a sterile environment. The mycelium then grows automatically. The mycelium is grown in a container that allows only a small amount of sterile air to enter the container. Volumes of sterile air are regulated by capping the container. This modulates ambient oxygen in the container.

The step 34 grows the mycelium to a desired stage, for example, where fruiting bodies begin to appear on the surface of the substrate.

The step 36 boils the substrate in water to separate the polysaccharides in the mycelium and other beneficial components to suspend in the water, separating aqueous component from the residual substrate solids. The non-aqueous component includes the substrate solids. Separating the aqueous component from the non-aqueous component can be accomplished by filtering or siphoning. It can be appreciated that other methods known in the art can be utilized.

The step 38 adds a mixture of small molecule components to the aqueous component. This enables the aqueous components to be more bio-available in vivo.

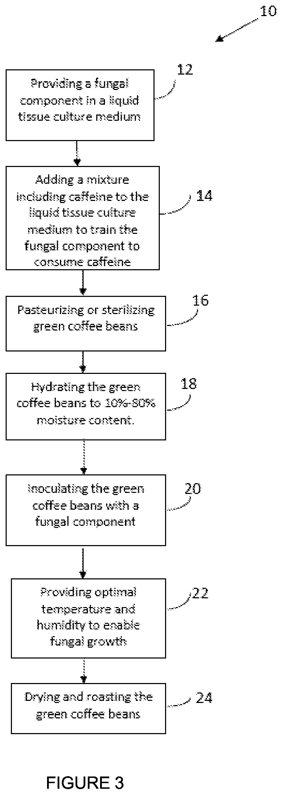

FIG. 3 shows a method of the present invention 10. The method 10 includes the step 12 of providing a fungal component in a liquid tissue culture medium, the step 14 of adding a mixture including caffeine, such as the undefined medium containing green coffee bean extract, to the liquid tissue culture medium to train the fungal component to consume caffeine, the step 16 of pasteurizing or sterilizing the cacao beans or other agricultural substrate, the step 18 of hydrating the cacao beans or other agricultural substrate to 10-80% moisture content, the step 20 of inoculating the cacao beans or other agricultural substrate with the fungal component, the step 22 of providing optimal temperature, oxygen content and humidity to enable fungal growth, and the step 24 of drying and roasting the cacao beans or other agricultural substrate.

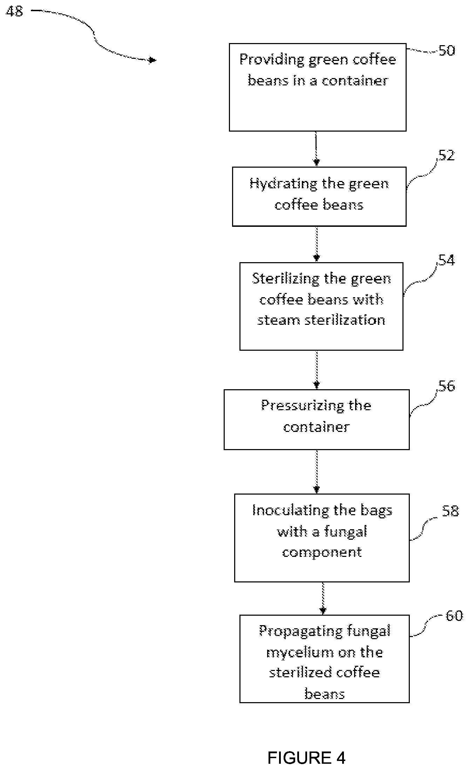

FIG. 4 shows a method 48 of manufacturing coffee in accordance with the present invention. The method 48 includes the step 50 providing coffee beans in container. Preferably, the container is an autoclavable bag.

The step 22 includes reducing oxygen levels to facilitate facultative anaerobic mycelium growth on the cacao beans or other agricultural substrate to maximize the consumption rates of caffeine by the mycelium of the fungal component. In the step 50 the container is sealed, allowing only a minimal leakage.

The step 52 hydrates the coffee beans to optimal moisture content. In one method, the step 52 of hydrating the coffee beans includes soaking the coffee beans in water for two hours, and draining the coffee beans for two hours before sterilization of pasteurization. This is an important step because hydration of the coffee beans accelerates mycelial growth. The step of hydrating the coffee beans also removes unwanted residue, and can remove some undesirable water-soluble components from the coffee beans. In an alternate method, a fluid other than water is used. For example, water infused with an enzyme can eliminate undesirable components from the coffee prior to the step 54 of sterilization. The pH of the water can be regulated to optimize hydration step 52. Distilled water, or mineralized water, can be used for the step 52 of hydration 52.

The step 54 sterilizes the cacao beans or other agricultural substrate with steam and the step 56 pressurizes the container. The step 56 of pressurization the container is typically included with the sterilization step 54. Accordingly, the sterilization step 54 is accomplished with pressure ranging from 5-25 lbs per square inch. Preferably the pressure is 10-20 lbs per square inch. In one method, the pressure is 15 lbs per square inch.

Sterilization under the step 54 may be accomplished under the conditions of 121-122°C at 15 lb/in2; 115-116°C at 10/in2; and 108-109°C at 5 lb/in2 for a time period of 20 to 100 minutes, or pasteurization under the conditions of dry heat treatment at 140°C - 210°C for a period of 20 to 100 minutes. These parameters can be varied.

The step 58 inoculates the bags with a fungal component. In one method, the step 58 is accomplished with a liquid tissue culture having fungal hyphael sphere sizes of 5-100 microns in diameter to assure consistent inoculation. In another, solid state tissue culture is added to the coffee and mixed with the coffee in a consistent manner. In yet another both liquid tissue culture and solid state tissue cultures are both added to the coffee beans in the container to reduce the time required to propagate fungal mycelium on the sterilized coffee beans as described in step 60.

In one method, the step 58 is accomplished by cooling the container to 80-100 °F after the steps 54 and 56 and injecting fungal liquid tissue culture directly into the container. The step 60 propagates the fungal mycelium within the same container. The container may be agitated or spun to assure consistent distribution of the fungal liquid tissue culture. In an alternate method, the coffee beans are transferred from the containers into a vat for the step 58 of inoculation.

In another method, the step 58 is accomplished with a liquid tissue culture derived from liquid state fermentation. The liquid tissue culture yields a pure culture of a fungal strain comprising spherical conglomeration with size less than 2 millimeters in diameter, which enables hyphae growth in three dimensions around the spherical conglomeration of the culture of the fungal strain. In a variation of this method, liquid state fermentation yields a pure culture of a fungal strain comprising spherical conglomeration with size ranging from 5 microns to 1 millimeter in diameter due to shearing of hyphae structures during a process of agitation or stirring of liquid media. Agitation and/or swirling processes can include, but not limited to, for example, mechanical shearing using magnetic stir bars, stainless steel impellers, injection of sterile high-pressure ambient air, injection at high-pressure of sterile media, and/or use of shaker tables. Higher agitation and swirling rates, in conjunction with air and media injections, produce small mycelial spheres, aliquots of which are used to inoculate solid-state agricultural substrate(s) for subsequent semi-anaerobic fermentation. Optimally the mycelial spherical conglomerations are less than 100 microns in diameter, and more preferably, within the range of 10-50 microns in diameter.

The step 58 of inoculating the bags includes using a floating or submerged liquid-state culture, myceliated substrate such as grain or coffee, or petri plate culture inoculate a solid-state cultivation medium comprised of sterilized or pasteurized cacao beans or other agricultural substrate. Special attention is paid to sub-strains that exhibit enhanced ability to ferment coffee. These strains can be selected and propagated, being cultured on petri-plate and liquid media composed of a certain concentration of green coffee bean extract (as in, four to five cacao beans or other agricultural substrate are added to the liquid tissue culture media prep), in a submerged or floating liquid state, and then used to inoculate sterilized cacao beans or other agricultural substrate at a faster rate than strains and sub-strains that are not conditioned to ferment coffee.

The step 60 of propagating fungal mycelium on the sterilized coffee beans is preferably accomplished in an anaerobic environment. Accordingly, once substrate (coffee beans) has been sterilized or pasteurized, the subsequent facultative anaerobic metabolic activity of the fungi as described by the Pasteur Effect can be induced after the step 58 of inoculation.

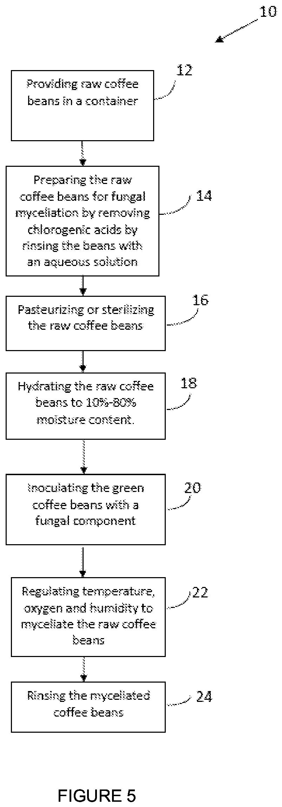

FIG. 5 shows a method 10 of the present invention. The method 10 includes the step 12 of providing cacao beans or other agricultural substrate in a container, the step 14 of preparing the cacao beans or other agricultural substrate for fungal myceliation by removing chlorogenic acids. In one embodiment the step 14 includes rinsing the beans in an aqueous solution.

The method 10 further includes the step 16 of pasteurizing or sterilizing the cacao beans or other agricultural substrate, the step 18 hydrates the cacao beans or other agricultural substrate to 10%-80% moisture content, the step 20 inoculates the cacao beans or other agricultural substrate with a fungal component, the step 22 regulates temperature, oxygen and humidity in the container to myceliate the cacao beans or other agricultural substrate. This step 22 optimizes the rate of myceliation.

The step 24 rinses the myceliated coffee beans to eliminate surface build-up of mycelial metabolites and other undesired material caused by the myceliation step 22.

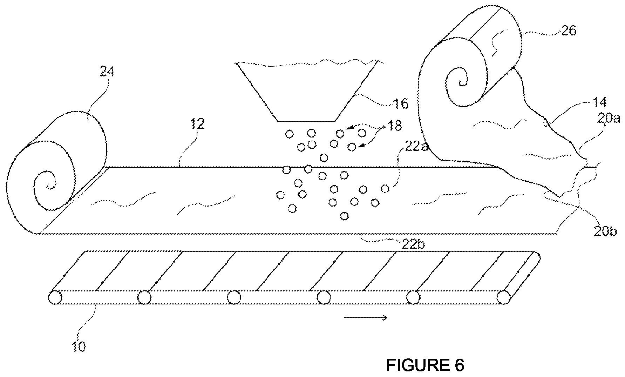

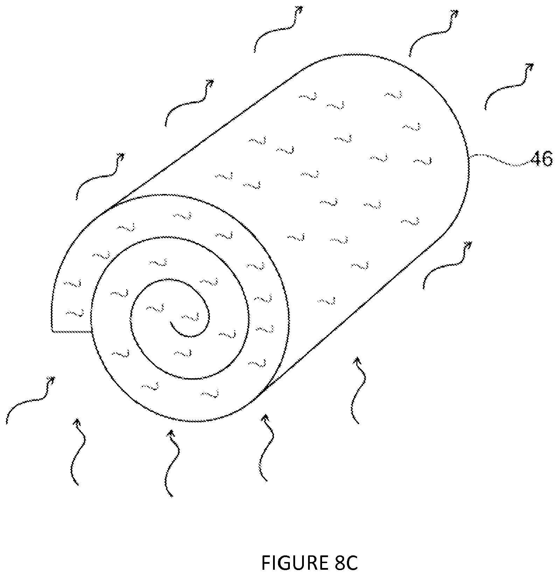

FIG. 6 shows a conveyer 10, a first sheet 12 of autoclavable material, a second sheet 14 of autoclavable material, and a hopper 16 dispensing coffee beans between the sheets 12 and 14. The first sheet 12 extends from a roll 24 of autoclavable material and is laid on the conveyer 10. The hopper 16 releases coffee beans on the first sheet 12. The second sheet 14 is initially rolled in a roll 26 and then laid on the coffee beans and the first sheet 12. The first sheet 12 has edges 22a and 22b. The second sheet 14 has edges 20a and 20b, which seal against the edges 22a and 22b of the first sheet 12 to form a large autoclavable bag, which can be rolled as shown in FIG.8c and designed to hold over 150 lbs of coffee beans.

A vacuum may be optionally applied to extract air from between the sheets 24a and 24b, which optimizes heat transfer to the coffee beans 18 when the coffee beans 18 are delivered to a sterilization chamber. The vacuum also and inhibits relative movement between the coffee beans 18. The conveyer 10 delivers the coffee beans 18 into a sterilization chamber.

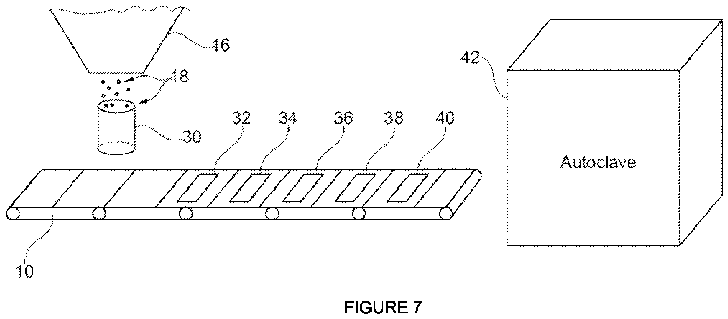

FIG. 7 shows the conveyer 10. The hopper 16 delivers coffee beans to an autoclavable bag 30. The autoclavable bag 30 is then sealed and laid on the conveyer 10. The conveyer 10 Transports numerous autoclavable bags 30, 32, 34, 36, 38 and 40, to an autoclave 42. The autoclave 42 in one method applies heated fluid such as steam, and pressure, to the autoclavable bags 30, 32, 34, 36, 38 and 40 to effectuate sterilization or pasteurization of the coffee beans 18.

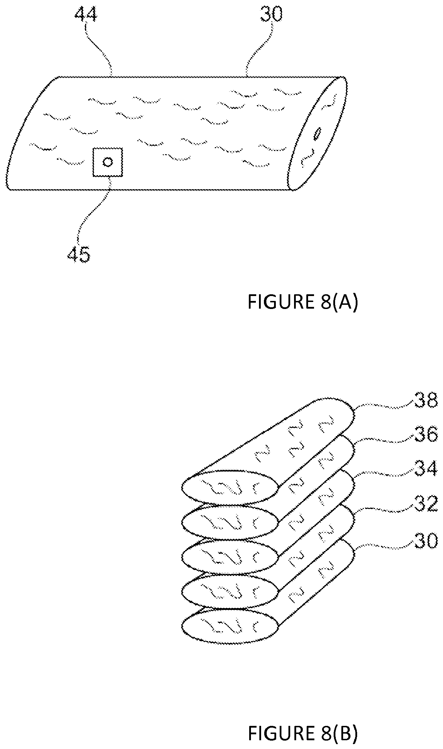

FIG. 8a shows an autoclavable bag 30 filled with coffee beans. The autoclavable bag 30 is under pressure causing a pebbled surface 44. Alternatively, the autoclavable bag 30 is vacuum sealed to cause the pebbled surface 44.

FIG. 8b shows autoclavable bags 30, 32, 34, 36 and 38 stacked for sterilization or pasteurization in an autoclave. The pebbled surface 44 improves heat transfer to the green coffee beans enclosed in the bag 30. The autoclavable bag 30 includes at least one breather patch 45 adhered to the pebbled surface of the bag 30. Preferably, the breather patch 45 includes vents having a 0.2 micron diameter to enable a minimal amount of air flow through the bag 30 and to assure that mycelium propagated within the bag 30 propagate semi-anaerobically. It can be appreciated that the breather patches can have pores of between 2-100 microns in diameter. Preferably the breather patch 45 vents having a 5 micron or less vent diameter. More than one breather patch 45 can be adhered to the pebbled surface of the bag 30, and can be used on containers other than bags in accordance with the present invention.

FIG. 8c shows a continuous bag 46 of autoclavable material enclosing coffee beans. The continuous bag 46 is sealed to enable the bag 46 to be sterilized or pasteurized in an autoclave. In an alternate method, the bag 46 is sealed in sections so that the continuous bag 46 has multiple sections, which are isolated from each other to inhibit movement of air and coffee between sections. Turbulent airflow during sterilization is shown with arrows passing through the bag 46 and around its surfaces.

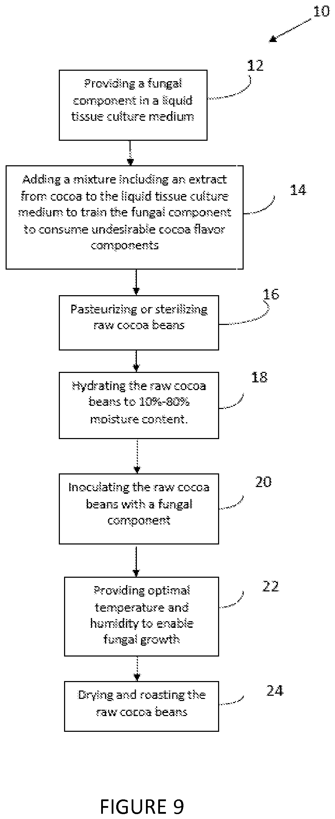

FIG. 9 shows a method of the present invention generally designated with the reference numeral 10. The method 10 includes the step 12 of providing a fungal component in a liquid tissue culture medium, the step 14 of adding a mixture including an extract of cacao to the liquid tissue culture medium to train the fungal component to consume undesirable cacao flavor components, the step 16 of pasteurizing or sterilizing the raw cacao beans, the step 18 of hydrating the raw cacao beans to 10-80% moisture content, the step 20 of inoculating the raw cacao beans with the fungal component, the step 22 of providing optimal temperature, oxygen content and humidity to enable fungal growth, and the step 24 of drying and roasting the raw cacao beans.

The step 22 includes reducing oxygen levels to facilitate facultative anaerobic mycelium growth on the raw cacao beans to maximize the consumption rates of 2-methoxy-3-isopropylpyrazine and theobromine by the mycelium of the fungal component.

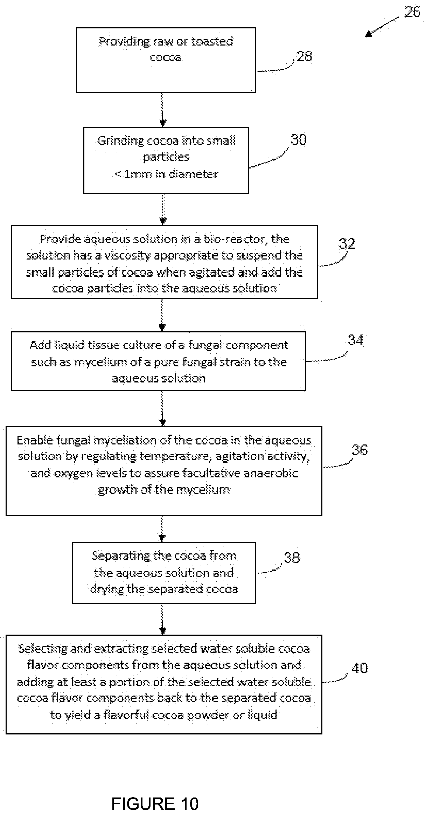

FIG. 10 shows a method 26 of aqueous myceliation of cacao in an aqueous solution. The method 26 includes the step 28 of providing raw or toasted cacao, the step 30 of grinding cacao into small particles of less than 1mm in diameter, the step 32 of providing an aqueous solution in a bio-reactor, the solution has a viscosity appropriate to suspend the small particles of cacao when agitated, the step 34 of adding liquid tissue culture of a fungal component such as mycelium of a pure fungal strain, the step 36 of enabling fungal myceliation of the cacao in the aqueous solution by regulating temperature, agitation activity, and oxygen levels to assure facultative anaerobic growth of the mycelium, the step 38 of separating the cacao from the aqueous solution and drying the separated cacao, and the step 40 of selecting and extracting selected water soluble cacao flavor components from the aqueous solution and adding at least a portion of the selected water soluble cacao flavor components back to the separated cacao to yield a flavorful cacao powder or liquid.

### EXAMPLES

### EXAMPLE 1

Specific and pure strains of Fungi obtained from referenced collections were manipulated in sterile environments in 1 gal to 10 gal plastic bags, 1 qt to 1 gal glass jar, or on 10 cm to 15 cm petri plates, using undefined, organic fruit and vegetable-based media including green coffee bean extract or cacao beans or other agricultural substrate extract with 1.5% agar (w/v), in order to monitor and ensure the general vigor and health of strains.

Mycelial samples were grown in a gentle, ambient sterile airflow for 2 to 4 weeks, then excised from petri plates and subsequently used for inoculation into liquid-state fermentation employing a similar undefined fruit and vegetable-based media (but with no agar), using ambient air, in 1 qt to 1 gal glass jars. Some samples were grown in agitated and some were grown in unagitated cultures in ambient air in stainless steel tanks designed for commercial beer brewing and/or fermentation.

The unagitated liquid state fermentation formed a floating mass of hyphae which exhibited continuous growth at interface of liquid and air. The mycelium of agitated and/or swirling cultures grew very quickly as hyphael spheres, which being hydrated, remained submerged, and had the appearance of gelatinous beads in small diameter. Hydrated hyphael spheres collapsed upon desiccation, wherein they were used for inoculating petri-plates for strain propagation and quality control.

Sphere diameter in liquid-state fermentation was found to be inversely proportional to agitation intensity and volume. Hyphael shear became more efficient at higher agitation and swirling intensity, and once sheared, hyphae formed new spheres of smallest possible diameter, growing in size until they sheared again. When employed in continuous liquid-state fermentation, there existed a constant ratio of sphere diameters, and therefore a constant supply of spheres on the order of microns was produced.

Thus, this example demonstrated that mycelia sphere diameter was manipulated for more efficient inoculation with inoculation efficiency being inversely proportional to sphere diameter.

### EXAMPLE 2

Mycelial cultures from unagitated liquid state fermentation (growth period of 2 to 4 weeks) formed a floating mass of hyphae, which were gently blended with a sharp, sterile cutting device prior to being used for inoculation. Gentle blending was achieved by mixing or low homogenization in a commercial blender in short bursts at slow speeds. Aliquots of blended liquid-state culture were used to inoculate sterilized unprocessed fruits and or vegetables, cereal grains, and/or culinary seed, or pasteurized culinary spice, medicinal herbs, natural flavorings, tea mixes, green vanilla beans, green cacao beans, and cacao beans or other agricultural substrate.

### EXAMPLE 3

Substrates for myceliation (containing both substrate and inoculated mycelial culture) in jars or bags were gently mixed every few days until they commanded the substrate and became somewhat resistant to mixing or shaking, usually 2 to 4 weeks depending upon strain. The products were then in a tempeh form. The myceliated green vanilla beans were cooked or baked; the myceliated green cacao beans were baked or toasted; and the myceliated cacao beans or other agricultural substrate were toasted or roasted. Myceliated grain presented in tempeh form, or as an ingredient in food(s) including soups, stir fries, breads, and meat-substitutes, was made safe to eat, and bio-available, by cooking on low to medium heat, 145 ° F to 165 °F, for 10 min to 60 min, at some point prior to consumption. Other cultures in jars or bags, such as herbs and spices were dried at 100 °F to 145 °F for 1 h to 24 h, packaged and used conventionally.

Myceliated honey formulations were stirred for 10 min to 90 min at 100 °F to 125 °F, then poured into small glass bottles. Moreover, myceliated agricultural products were reformulated into value added products such as egg noodles, meat substitutes, specialty flavorings, cooking sauces, soup ingredients and the like.

### EXAMPLE 4

For a large batch liquid-state and solid-state operation, pure cultures were grown aerobically and inoculated into large industrial liquid-state and large solid-state commercial processors operated continuously and semi-anaerobically for large-scale fermentation of food products. After cultures of media turned completely white or a representative color thereof for a particular species, and had completely overgrown and commanded the medium and were resistant to gentle mixing, the contents were harvested, removed to plastic bags and refrigerated for quick use at either 40 °F, or frozen for long-term storage, and subsequent utilization, at -20 °F. Fermented media were prepared into gourmet human foods including: "tempeh style" meat substitutes, egg-noodles, specialty flavorings, breads, extracts and cooking-sauces, or used directly as a fresh ingredient in soup and/or stir fried recipes, or packaged.

### EXAMPLE 5

Agricultural substrates were completely myceliated by inoculating with pure cultures of fungal strains selected from *A*. *blazei, C. sinensis, G. lucidum, H. erinaceus, G. frondosa, P. eryngii, P. ostreatus, P. citrinopileatus, P. djamor, T. versicolor, L. edodes, F. velutipes, V. volvacea, H. marmoreus, P. nameko, T. melanosporum, M. hortensis, P. umbellatus, and T. fuciformis* were subjected to heat treatment 1 hour to 24 hours prior to harvest for 1 min to 2 hours at 145 °F to 195 °F followed by recovery at room temperature for 45 min to 48 hours. This process showed remarkable decrease in RNA levels and were formulated into different nutraceutical compositions.

### EXAMPLE 6

71 lbs. of cacao beans were soaked in an equivalent volume of water for 5 minutes, after which the water was filtered off and the cacao was equally distributed into 10 polypropylene bags with 0.2 micron breather patches. The tops of the bags were folded over the bag and had rubber bands wrapped around each side of the bag. The bags were sterilized for 80 minutes at 22 psi with slightly dry saturated steam at 255 °F. The bags were then cooled in a sterile environment for 8 hours, and were subsequently inoculated with submerged liquid tissue cultures of *Ganoderma lucidum, Cordyceps sinensis, Tuber melanosporum,* or *Morchella angusticep,* with sterile tools and in sterile operation inside a sterile laminar flow hood. The inoculant were grown in 4 L flasks, in 1.5 L of media prepared from the mixture with 10 L of organic potato extract, 2 L of raw cacao bean extract, and 1 L organic mango juice, and 50 mL of inoculant was used for each bag of cacao after the inoculant had grown for 7 days under 60 RPM of 1 in. radius agitation. The cultures myceliated for two weeks, whereupon they were dried and tasted. It was noted that the *Tuber melanosporum* cacao conferred the least bitter taste (most improved taste).

### EXAMPLE 7

Samples of Barley, Brown Rice, Buckwheat, Bulgur (cracked wheat), flaxseed, Grano, Millet, Oats, Oat Breat, Oat Cereal, Oatmeal, Popcorn, Whole Wheat Cereal Flakes, Muesli, Rolled Oats, Quinoa, Rye, Sorghum, Spelt, Triticale, Whole Grain Barley, Wheat Berries, Whole Grain Cornmeal, Whole Rye, Whole Wheat Bread, Whole Wheat Couscous, and Wild Rice were individually mixed with half their volume of water in appropriately prepared quart ball jars or autoclavable bags with breather patches and sterilized at 15 psi for 90 minutes or 22 psi for 80 minutes. Once cool, the grain jars were inoculated with half to whole colonies of floating or submerged fungal cultures selected from one of the following: *Ganoderma lucidum, Cordyceps sinensis, Tuber melanosporum, Hericium erinaceus, Agaricus blazei, Grifola frondosa, Pleurotus ostreatus, Trametes versicolor, Laetiporus sulphureus, Flammulina velutipes, Lentinula edodes, Morchella angusticeps, Morchella crassipes, Morchella hesculenta, Tremella fuciformis,* and *Inonotus obliquus,* where the floating cultures were grown on an organic undefined media in quart or half-gallon ball jars, and where the submerged cultures were grown in 4 L flasks in 1.5 L of undefined media. After myceliating for two weeks, the jars were thoroughly grown through, and were pasteurized at 212 °F in a double boiler for 7 minutes before being cooked and consumed as tempeh, or further formulated into a nutriceutical (i.e. formulated into 2 gallons honey in association with the small molecules ascorbic acid (1 g) and citric acid (10 g) with 8 mL of orange and tangerine essential oils with). This formulation step began by blending the pasteurized culture with 2 liters of water, or not, and then the ascorbic and citric acid was added to the blend, then the essential oils, then the honey, the formulation was then heated in a double boiler, bottled, and pasteurized once bottled to ensure a secure seal.

### EXAMPLE 8

### Small Batch Work-coffee

48 lbs. of coffee was divided into 48 equal portions in clean quart ball jars with lids constructed to enable gaseous diffusion past a collar. These 48, 1 lbs. masses of coffee were soaked with ¾ quart of water for two hours. The water in the mixtures was filtered off. The jars of coffee were then subjected to 90 minutes of sterilization temperatures at 15 psi, and placed in a sterile laminar air flow to cool for 8 hours. Once cool, the coffee beans were inoculated with half to whole colonies of fungus selected from one of the following: *Ganoderma lucidum, Cordyceps sinensis, Tuber melanosporum, Hericium erinaceus, Agaricus blazei, Grifola frondosa, Pleurotus ostreatus, Trametes versicolor, Laetiporus sulphureus, Flammulina velutipes, Lentinula edodes, Morchella angusticeps, Morchella crassipes, Morchella hesculenta, Tremella fuciformis,* and *Inonotus obliquus,* doing three of each, growing on an undefined vegetable and fruit juice agar media containing green coffee extract as described in Example 8, with sterile tools and in sterile operation inside the laminar flow hood. The cultures myceliated for 7 to 21 days, with samples of each being pulled out for drying and roasting at the 7^{th}, 14^{th}, and 21^{st} days. The smell of the culture and taste of the coffee at the 7^{th} day indicated that the cultures were complete, though longer myceliation periods yielded greater cell mass.

### Large Batch Work--coffee

528 lbs. of cacao beans or other agricultural substrate were soaked in two different procedures. In the first procedure, the beans were soaked three times, for 20 minutes each soak, in the second procedure, the beans were soaked for 20 minutes through a constant stream of filtered water. The beans were then packed into polypropylene bags with 0.2 micron breather patches, with the tops of the bags folded over with rubber bands wrapped around the sides of the bags, such that steam and gas diffusion could occur through breather patch and through the folded sides of the bags. The bags were sterilized under a liquid cycle at 22 psi for 80 minutes, and then allowed to cool for 8 hours. The bags were inoculated with fungi from the following species: *Ganoderma lucidum, Cordyceps sinensis, Tuber melanosporum,* and *Morchella angusticpes.* The *Ganoderma lucidum* culture was grown in a bioreactor, with 10 L of organic potato extract, 2 L of green coffee extract, and 1 L organic mango juice diluted to 100 liters with RO water. The bioreactor was sparged with compressed air filtered through two inline 0.2 micron hydrophobic capsule filters, and the reactor was kept under 2-3 psi through the use of check valves on the air supply and venting lines with 2-3 psi cracking pressure ratings. The inoculant was readily grown in 48 hours, and was harvested through a diaphragm valve located at the bottom of the reactor, which led to a harvesting line that had teed and valved off access to a steam line and steam trap, with an inline check valve, through six feet of flexible stainless steel hosing, to a solenoid valve connected to a timer and foot switch, followed by a flow metering valve to an elbowed sanitary fitting. While being steamed, the elbowed sanitary fitting was connected to a ball valve that connected to the steam exhaust manifold. The ball valve was closed after steaming the line, and the ball valve was detached from the harvesting line once entered into a laminar flow hood, so as to keep the whole line sterile. The *Cordyceps sinensis, Tuber melanosporum,* and *Morchella angusticeps* cultures were grown in 4 L flasks, in 1.5 L of the same media used in the bioreactor pre-dilution. These cultures were grown for six days, and were used to inoculate the bags of sterilized cacao beans or other agricultural substrate. The beans were myceliated for 7 days, where their smell conferred the desired taste profile of the beverage made from the roasted myceliated beans, whereupon they were dried on the 8^{th} day to a 13% moisture content.

### EXAMPLE 9

A suitable fungi for use in the methods of the present invention was prepared by the following methods. The following G. *lucidum* strains were purchased commercially from the Pennsylvania State University mushroom culture collection: 496 Ling ZHI; Singapore commercial line; 7/85; 502 IFO #8436; IFO-Japan; 7/30/85; 510 Red oak, State College, PA; D.J. Royse; 9/85; 549 Y.H. Park, ASI-Korea; 12/5/85; 550 Y.H. Park, ASI-Korea; 12/5/85; 551 Y.H. Park, ASI-Korea; 12/5/85; 580 Y.H. Park, ASI-Korea; 2/10/85; 607 Y.H. Park, ASI-Korea; 2/19/85; 617 Y.H. Park, ASI-Korea; 2/25/85; 618 Y.H. Park, ASI-Korea; 2/25/85; 619 Y.H. Park, ASI-Korea; 2/25/85; 620 Y.H. Park, ASI-Korea; 2/25/85; 621 Y.H. Park, ASI-Korea; 2/25/85; 622 Y.H. Park, ASI-Korea; 2/25/85; 623 Y.H. Park, ASI-Korea; 2/25/85; 624 Y.H. Park, ASI-Korea; 2/25/85; 625 Y.H. Park, ASI-Korea; 2/25/85; 626 Y.H. Park, ASI-Korea; 2/25/85; 627 Y.H. Park, ASI-Korea; 2/25/85; 665 Quimio; Philippines; 3/6/86; 669 Y.H. Park, ASI-Korea; 3/25/86; 686 B. W. Yoo; 4/28/86; 724 T. Mitchel, Lawn PSU Forestry Bldg. 9/16/90; 806 Alice Chen; Buffalo, NY; 4/94; 807 Alice Chen; North Carolina; 4/94; 841 White Oak; PSU Campus; J. Peplinski; 8/99. The above strains were cultured using the media described herein comprising cacao beans or other agricultural substrates extract (see Example (10). Many strains were unable to grow and/or died on the media. Surprisingly, the inventors found that *G. lucidum* strain 806 Alice Chen; Buffalo, NY was able to grow on the media comprising green coffee bean extract and was selected for further use in accordance with the instant invention.

### EXAMPLE 10

Fungi (including *G. lucidum* strain 806, *C. sinensis,* and *T. melanosporum* as described herein, also *H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus)* were maintained on a culture comprising an undefined media including extract of cacao beans. Experiments showed that use of the media including extract of cacao beans to culture the maintained the fungi's ability to tolerate, grow on, metabolize, remove or reduce caffeine or undesirable flavor components. It was also found that successive propagations of fungi as defined above caused enhancement and/or improvement of the fungi's ability to tolerate, grow on, metabolize, remove or reduce caffeine or decrease undesirable flavor components, resulting in training or adapting the fungi to undefined media including extract of cacao beans. Such fungi with changed, improved, and adapted properties as described herein, relative to the starting strains, either selected or unselected, were developed. These adapted strains were deposited with the ATCC as described elsewhere herein.

The undefined media including extract of cacao beans was made as follows: 2 lbs cacao beans or other agricultural substrate, pulverized was mixed with ¼ gallon water at room temperature. The mixture was allowed to extract for 20 minutes with shaking, then filtered three times through fine mesh. Separately, 5 organic potatoes were placed in 10 L of water and autoclaved 20 minutes to soften the potatoes. The potatoes were then pulverized with a potato masher, and then filtered through fine mesh three times. 1 L of commercial unsweetened fruit juice was be added. These solutions are combined and autoclaved. This recipe was also scaled up or down as required.

The washed cacao beans were washed in water and the moisture content was raised to about 30%. At other times the moisture content was raised to about 60%.

Liquid culture: The culture comprising fungi for use in inoculating the prepared cacao beans or other agricultural substrate was agitated with sparged air and a motorized paddle to create turbulent environment and to shear hyphae with pure mechanical force. The dual agitation method was superior to either method individually, since sparged air created the most turbulence at the top half of the culture, while affecting the bottom less, which was agitated by a motorized paddle. In return the paddle could be run at a lower RPM and still obtain the hyphal sphere size obtained by a faster RPM in the absence of sparging. The hyphal size was about 2-5 micron in diameter). Undamaged mycelium and proper morphology in the prepared fungi were prepared by this method and used for culturing and/or myceliation.

### EXAMPLE 11

Black Italian Winter Perigord Truffles [Truffle 1 (T1), and Truffle 2 (T2)], were aseptically manipulated in the mycology laboratory environment to obtain a number of new truffle cultivars for commercial work, including opposite mating type isolates, by the following 4 methods.

Method 1: fresh (less than one week old) intact whole pieces of T1 (truffle gleba chunks of approximately 10mm by 20mm in size) were placed into oak-agar (a general undefined agar media based on oak leaves and oak twigs), in 50 petri plates, which were sealed with parafilm to allow cultures to incubate at room temperature (23 °C) for 5 weeks. After 5 weeks, pieces of T1 were seen to regenerate into mycelia described by the following cultivars: (a) vigorous white mycelium having purple hues, on 6 petri plates, (b) vigorous golden mycelium with purple hues, on 3 plates, (c) vigorous white and gold mycelium, on 6 plates, (d) non-vigorous wispy purple and gold mycelium on 2 plates, and (e) non-vigorous wispy white and gold mycelium on 2 plates. The remainder of the petri plates (37 plates) were discarded after becoming overgrown by (bacterial and fungal) contamination. Isolates (a), (b), and (c) were determined to have commercial potential. The (a) vigorous white isolate is the mating type mycelium maternal to the original truffle mushroom, while isolate (b) is the paternal mating type mycelium to the original truffle mushroom, and (c) is a cultivar derived from non-sexual genetic recombination or anastomosis of both the (a) and the (b) mating types. After 5 to 6 weeks growing on oak-agar, cultures of the (c) vigorous white and gold mycelium begin to produce tiny (0.1mm to 2.0 mm) truffle fruits. After the structures were cultured to fresh petri plates, and onto similar agricultural media, these cultures produced ever-growing black truffle mushrooms.

Method 2: fresh (less than one week old) intact spores of T1 (0.01 g to 0.1 g clumps of spores of a mass approximately 0.1mm by 0.1mm in size) were placed into seasoned oak-agar medium in petri plates (40 plates), which were sealed with parafilm for 5 weeks to allow spores to sprout at room temperature (23 degrees C). After 5 weeks, spores were seen to sprout into mycelia on 10 plates; however, all mycelium that sprouted from the spores, though viable, was extremely wispy and grew slowly.

Method 3: fresh (less than one week old) intact whole pieces of T1 (40 g of gleba chunks of approximately 10mm by 20mm in size) were placed into 2 bottles each containing 400ml sterile water and 50 ug/ml of each the following antibiotics: Ampicillin, Penicillin, Chloramphenical, Erythromycin, Neomycin, Streptomycin, with closures on but not tight, where they were allowed to incubate undisturbed for 5 weeks at room temperature (23 ° C) with an occasional gentle shaking. After 5 weeks, intact pieces were removed from antibiotic buffer and cast into general undefined agar media (containing the same levels of antibiotics), based on Oak leaves and twigs, into 50 petri plates which were then sealed with parafilm to allow cultures to incubate for 2 weeks at room temperature (23 °C). After 2 weeks of regeneration in agar, pieces of T1 regenerated into the following mycelial cultivars: (a) white mycelium on 12 petri plates, (b) golden mycelium on 4 plates, (c) white and gold mycelium on 2 plates. The remainder of the petri plates (32 plates) were discarded after showing no growth or after becoming overgrown by fungal contamination. The isolates obtained via Method 3, though very similar to the isolates from Method 1, were much less vigorous.

The isolates (a), (b) and (c) from Method 1 were prepared as described herein and used for myceliation of substrates. The substrate was prepared cacao beans. The myceliation of the prepared cacao beans was allowed to proceed until the desired coffee flavor for the resultant roasted cacao beans and resultant chocolate was achieved, about 7 days. The resultant myceliated cocoa beans were roasted and turned into chocolate, and tasted by trained tasters. It was found that when the isolate described for method 1, isolate (a) was used, a pleasant flavorful aroma/taste in the myceliated chocolate, reminiscent of flowers was achieved. When the isolate described for method 1, isolate (c) was used, a pleasant flavorful aroma/taste, reminiscent of truffles, was achieved.

### EXAMPLE 12

The coffee beans and grounds produced by the methods of the instant invention contained added polysaccharides and beta glucans. An analysis showed that Robusta coffee grounds produced by the methods of the invention had 30.54 mg dextran per gram of coffee grounds. This result provided the total polysaccharide amount in the substrate through a spectrophotometric method based on a modified phenol-sulfuric acid approach. The analysis also showed that Robusta coffee grounds produced by the methods of the invention had beta glucans at 0.432%, as measured by the MYBG method utilizing strong hydrolysis conditions to hydrolyze beta glucan with quantification by spectrophotometric method. This represents an advantage over consuming beta-glucans from Reishi mushrooms, as these mushrooms are a non-culinary mushroom for reasons of bitterness, woodiness, and hardness, or in pill form.

### EXAMPLE 13

### Taste Comparison 1, Sumatran, Peruvian, and Honduran Arabica beans

A coffee professional and owner of a coffee roasting business owner (taster) and a trained employee taste-tested, in a double-blind trial, a comparison of standard premium coffee beans using Sumatran, Peruvian, and Honduran Arabica beans (control beans) with coffee beans produced by the methods of the present invention (myceliated beans). Both myceliated beans and control beans were roasted by on the day of the trial. These were cupped side-by-side with the control, using standard coffee tasting techniques.

The flavor-enhancing effects of myceliation were confirmed. The tasters sampled myceliated and normal brews of each variety in this blind taste test. Notes were taken. At the conclusion of the tasting, the coffee beans used for each cup were identified.

Commenting first on the myceliated Sumatra it was described as having a fuller body, more complex and less bitter flavor than the control Sumatra. The tasters stated that this was the only process they were aware of that actually removed a taste defect and actually enhanced the flavor.

The myceliated Peruvian showed a noticeable flavor-enhancement as well, being a less bitter, more sweet, and a markedly "brighter" cup when myceliated. Despite being a high-quality bean, the control Peruvian tasted "flat" by comparison.

Out of the two tasters, one taster was able to taste a difference in the Honduran brew. The methods of the invention resulted in removing the bitter compounds found in coffee resulting in a better tasting cup of coffee.

### Taste Comparison 2 Arabica beans

A myceliated coffee taste test was held at a coffee house. The barista/roaster (taster) delivered the formal cupping of their in-house Sulawesi Arabica coffee (Indonesian in origin). The beans were selected from inventory and both the myceliated and control beans (Arabica) were roasted the day of the cupping. The results showed that myceliated coffee (produced by the methods of the invention) had an improved flavor profile.

The taster described the myceliated coffee as less acidic, sweeter, fuller in body, more complex and overall a better taste than the original bean. Several other participants in the taste test and also noticed the flavor-enhancement found in myceliated coffee.

### Taste Comparison 3 Robusta beans

A coffee professional and owner of a coffee roasting business owner (taster) and a trained employee taste-tested, in a double-blind trial, a comparison of control Robusta coffee beans with Robusta coffee beans produced by the methods of the present invention. Coffee made from 100% Robusta beans is generally considered undrinkable due to the high acidity and bitterness of Robusta. Thus, Robusta coffee beans are not typically used alone, instead, Robusta beans are typically pre-processed (e.g. steamed), then blended with more expensive beans to make it palatable.

This lower quality bean is considered undrinkable by some due to its bitterness, but Robusta is used commercially in coffee blends to bring the price down. Robusta is growing in its use and the Robusta segment of the coffee market has grown from 39% of the market in 2008 to 41% of the market in 2013.

The tasters agreed that myceliated Robusta is "hands-down" a better cup of coffee than non-myceliated. One taster commented that "you have proved beyond a doubt that your technology works"; the other taster commented that he is a self-proclaimed coffee snob and "I would drink this myceliated Robusta on a daily basis", simultaneously remarking that the non-myceliated coffee was unpalatable. More specifically, he noticed a conspicuous lack of bitterness and acidity in the cup, with a fuller body in the taste. The tasters remarked that a non-professional coffee taster would be able to taste and appreciate the difference, and that myceliated Robusta holds great value in the marketplace. Other employees of the roasting company also noticed the difference.

The taste testing results clearly demonstrate that the instant processes enhance the taste of coffee. The results showed that the processes of the invention removed taste defects like bitterness from both Arabica and Robusta coffee beans and enhanced their flavor and value. The processes result in a sweeter, fuller bodied and more complex tasting coffee with either Robusta or Arabica beans.

### Taste Comparison 4 Cacao beans

Cacao beans prepared by the method of Example 6 was processed into chocolate and tasted to compare to chocolate made by beans that had not been subjected to the process in Example 6. The taster stated that the chocolate from the myceliated chocolate had an aroma and taste that was richer, smoother, and sweeter with less bitter, harsh, and/or acidic tastes and aromas than compared with the chocolate made from the untreated cacao beans. The taster stated that less sugar and/or other sweetener such as dairy were necessary to create a chocolate that was highly palatable as compared to chocolate made from the untreated cacao beans.

## Claims

1. A method for preparation of a myceliated cacao product, comprising:
a) providing prepared cacao beans comprising the steps of:
i. providing cacao beans;
ii. sterilizing the prepared cacao beans;
b) providing a prepared fungal component as a liquid culture;
c) inoculating the prepared cacao beans with the prepared fungal component; and
d) culturing the prepared cacao beans and prepared fungal component to allow myceliation to prepare the myceliated cacao product, wherein the myceliated cacao is less bitter than raw cacao that is not myceliated, wherein the prepared fungal component is selected from the group consisting of *G. lucidum, H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus, C. sinensis, T. melanosporum,* and combinations thereof.

2. The method of claim 1, wherein the step of providing prepared cacao beans further comprises hydrating the cacao beans.

3. The method of claim 2, wherein the cacao beans are hydrated to a 60% moisture level or to a 30% moisture level.

4. The method of claim 1, wherein the prepared fungal component is *G. lucidum.*

5. The method of claim 4, wherein the prepared fungal component is *G. lucidum* strain 806.

6. The method of claim 1, wherein the prepared fungal component is *C. sinensis.*

7. The method of claim 1, wherein the prepared fungal component is prepared by a method comprising maintaining a strain of fungi on an undefined media comprising an aqueous cacao bean extract and an energy source.

8. The method of claim 1, wherein the culturing step is carried out for 7 days.

9. A myceliated cacao product prepared by the method of claim 1.

## Patentansprüche

1. Verfahren zur Herstellung eines myzelierten Kakaoprodukts, das Folgendes umfasst:
a) Bereitstellen vorbereiteter Kakaobohnen, was folgende Schritte umfasst:
i. Bereitstellen von Kakaobohnen;
ii. Sterilisieren der vorbereiteten Kakaobohnen;
b) Bereitstellen einer vorbereiteten Pilzkomponente als flüssige Kultur;
c) Beimpfen der vorbereiteten Kakaobohnen mit der vorbereiteten Pilzkomponente; und
d) Kultivieren der vorbereiteten Kakaobohnen und der vorbereiteten Pilzkomponente, um Myzelierung zu erlauben, um das myzelierte Kakaoprodukt herzustellen, wobei der myzelierte Kakao weniger bitter als roher, nicht myzelierter Kakao ist, wobei die vorbereitete Pilzkomponente aus der Gruppe ausgewählt ist, die aus *G. lucidum, H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus, C. sinensis, T. melanosporum* und Kombinationen davon besteht.

2. Verfahren nach Anspruch 1, wobei der Schritt des Bereitstellens vorbereiteter Kakaobohnen weiters das Hydratisieren der Kakaobohnen umfasst.

3. Verfahren nach Anspruch 2, wobei die Kakaobohnen auf einen Feuchtigkeitsgehalt von 60 % oder einen Feuchtigkeitsgehalt von 30 % hydratisiert werden.

4. Verfahren nach Anspruch 1, wobei die vorbereitete Pilzkomponente *G. lucidum* ist.

5. Verfahren nach Anspruch 4, wobei die vorbereitete Pilzkomponente *G. lucidum* Stamm 806 ist.

6. Verfahren nach Anspruch 1, wobei die vorbereitete Pilzkomponente *C. sinensis* ist.

7. Verfahren nach Anspruch 1, wobei die vorbereitete Pilzkomponente durch ein Verfahren vorbereitet ist, das einen Pilzstamm auf einem undefinierten Medium, das einen wässrigen Kakaobohnenextrakt und eine Energiequelle umfasst, erhält.

8. Verfahren nach Anspruch 1, wobei der Kultivierungsschritt 7 Tage lang durchgeführt wird.

9. Myzeliertes Kakaoprodukt, hergestellt durch das Verfahren nach Anspruch 1.

## Revendications

1. Procédé de préparation d'un produit de cacao colonisé par du mycélium, comprenant les étapes consistant à :
a) fournir des fèves de cacao préparées, comprenant les étapes consistant à :
i. fournir des fèves de cacao ;
ii. stériliser les fèves de cacao préparées ;
b) fournir un composant fongique préparé sous forme de culture liquide ;
c) inoculer les fèves de cacao préparées avec le composant fongique préparé ; et
d) cultiver les fèves de cacao préparées et le composant fongique préparé pour permettre à la mycéliation de préparer le produit de cacao colonisé par du mycélium, le cacao colonisé par du mycélium étant moins amer que le cacao brut qui n'est pas colonisé par du mycélium, le composant fongique préparé étant choisi dans le groupe constitué de *G. lucidum, H. erinaceus, T. versicolor, L. edodes, T. matsutake, F. velutipes, A. blazei, G. frondosa, P. nameko, L. officinalis, M. hortensis, M. angusticeps, A. auricula, T. fuciformis, I. obliquus, F. fomentarius, L. sulfureus, C. sinensis, T. melanosporum,* et des combinaisons de ceux-ci.

2. Procédé selon la revendication 1, dans lequel l'étape consistant à fournir des fèves de cacao préparées comprend en outre l'hydratation des fèves de cacao.

3. Procédé selon la revendication 2, dans lequel les fèves de cacao sont hydratées à un niveau d'humidité de 60 % ou à un niveau d'humidité de 30 %.

4. Procédé selon la revendication 1, dans lequel le composant fongique préparé est *G. lucidum.*

5. Procédé selon la revendication 4, dans lequel le composant fongique préparé est la souche 806 de *G. lucidum.*

6. Procédé selon la revendication 1, dans lequel le composant fongique préparé est *C. sinensis.*

7. Procédé selon la revendication 1, dans lequel le composant fongique préparé est préparé par un procédé comprenant le maintien d'une souche de champignons sur un milieu non défini comprenant un extrait aqueux de fève de cacao et une source d'énergie.

8. Procédé selon la revendication 1, dans lequel l'étape de culture est réalisée pendant 7 jours.

9. Produit à base de cacao colonisé par du mycélium préparé par le procédé de la revendication 1.
